# EUROPEAN PATENT SPECIFICATION

(11) **EP 3 925 988 B1**
(45) Date of publication and mention of the grant of the patent: **04.10.2023**
(21) Application number: 20855463.4
(22) Date of filing: 14.08.2020
(51) Int. Cl.: C08F 110/06, C08F 4/6592, C08F 4/659, C08F 4/646, C08F 2/38

(54) **HYBRIDE SUPPORTED METALLOCENE CATALYST AND METHOD FOR PREPARING POLYPROPYLENE USING THE SAME**
HYBRIDER GETRÄGERTER METALLOCENKATALYSATOR UND VERFAHREN ZUR HERSTELLUNG VON POLYPROPYLEN UNTER VERWENDUNG DESSELBEN
CATALYSEUR MÉTALLOCÈNE SUPPORTÉ HYBRIDE ET PROCÉDÉ DE PRÉPARATION DE POLYPROPYLÈNE L'UTILISANT

(30) Priority: 16.08.2019 KR 20190100466; 13.08.2020 KR 20200102000
(43) Date of publication of application: 22.12.2021
(73) Proprietor: LG CHEM, LTD., Yeongdeungpo-gu, Seoul 07336 (KR)
(72) Inventor: LEE, Sanghoon, Daejeon 34122 (KR); AN, Sangeun, Daejeon 34122 (KR); KIM, Seok Hwan, Daejeon 34122 (KR); HONG, Daesik, Daejeon 34122 (KR); GWON, Donghyeon, Daejeon 34122 (KR)
(74) Representative: Hoffmann Eitle
(86) International application number: PCT/KR2020/095104
(87) International publication number: WO 2021/034170

(56) References cited:
- KR-A- 20080 098 637
- KR-A- 20160 097 254
- KR-A- 20160 097 254
- KR-A- 20180 067 945
- KR-A- 20180 067 945
- KR-A- 20190 066 896
- US-A1- 2006 004 156

## Description

### [TECHNICAL FIELD]

The present application claims the benefit of Korean Patent Application No. 10-2019-0100466 filed on August 16, 2019 and Korean Patent Application No. 10-2020-0102000 filed on August 13, 2020 with the Korean Intellectual Property Office.

The present disclosure relates to a hybrid supported metallocene catalyst and a method for preparing a polypropylene using the same.

### [BACKGROUND]

Olefin polymerization catalyst systems may be divided into Ziegler-Natta and metallocene catalyst systems, and these two types of highly active catalyst systems have been developed in accordance with their characteristics.

The Ziegler-Natta catalyst has been widely applied to commercial processes since it was developed in the 1950's. However, since the Ziegler-Natta catalyst is a multi-active site catalyst in which a plurality of active sites are mixed, it has a feature that a resulting polymer has a broad molecular weight distribution. Also, since a compositional distribution of comonomers is not uniform, there is a problem that it is difficult to secure desired physical properties.

Meanwhile, the metallocene catalyst includes a main catalyst having a transition metal compound as a main component and an organometallic compound cocatalyst having aluminum as a main component. Such a catalyst is a single-site catalyst which is a homogeneous complex catalyst, and offers a polymer having a narrow molecular weight distribution and a uniform compositional distribution of comonomers, depending on the single site characteristics. The stereoregularity, copolymerization characteristics, such as molecular weight, and crystallinity of the resulting polymer may be controlled by changing a ligand structure of the catalyst and polymerization conditions.

Due to recent changes in environment-related awareness, many product groups seek to reduce the generation of volatile organic compounds (VOCs). However, in the case of a Ziegler-Natta catalyst (Z/N, ziegler-natta) used in the production of polypropylene, there is a problem that high total volatile organic compounds (TVOC) are generated. In particular, in the case of various polypropylenes products commercially available, to which Ziegler-Natta catalysts are applied constitute the mainstream, but recently, the conversion to products to which metallocene catalysts having low odor and exhibiting low elution characteristics are applied, is accelerating.

In particular, existing polypropylene is a general-purpose resin, and has the advantages of being light due to its low density, and having high rigidity and heat resistance, and low hygroscopicity, but has the disadvantages of being reduced in impact property and melt tension.

Therefore, there is a need to develop a method for preparing polypropylene that exhibits high activity in propylene polymerization using a metallocene catalyst and has a high melt tension through the introduction of long chain branches (LCB) into polypropylene molecules.

KR 2018 0067945 A describes hybrid supported metallocene catalysts. The hybrid supported metallocene catalyst includes: a carrier; and at least one first metallocene compound represented by chemical formula 1 and at least one second metallocene compound represented by chemical formula 3:

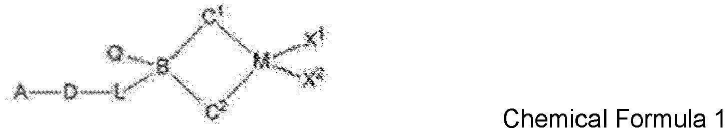

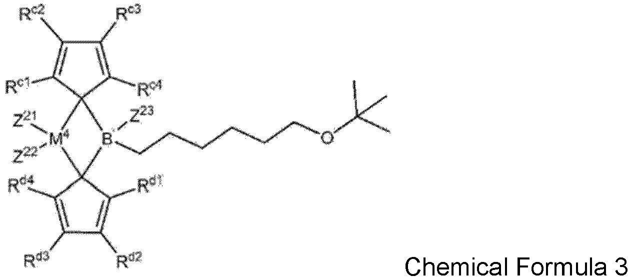

KR 2016 0097254 A describes long-chain branched polypropylene in presence of two metallocene-based active catalyst systems comprising a first and precatalyst of formula (I):

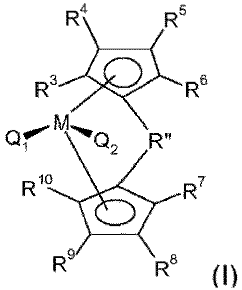

### [DETAILED DESCRIPTION OF THE INVENTION]

### [Technical Problem]

It is an object of the present disclosure to provide a hybrid supported metallocene catalyst which is useful for the preparation of polypropylene having a relatively high melt strength, along with excellent catalytic activity in propylene polymerization.

It is another object of the present disclosure to provide a method for preparing a polypropylene using the hybrid supported metallocene catalyst.

### [Technical Solution]

According to the present disclosure, there is provided a hybrid supported metallocene catalyst comprising at least one first metallocene compound selected from compounds represented by the following Chemical Formula 1; at least one second metallocene compound selected from compounds represented by the following Chemical Formula 3; and a support for supporting the first and second metallocene compounds: 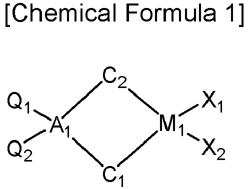 in Chemical Formula 1,
M₁ is zirconium or hafnium;
A₁ is carbon (C), silicon (Si), or germanium (Ge);
Q₁ and Q₂ are the same as or different from each other, and are each independently hydrogen, halogen, C₁₋₂₀ alkyl, C₂₋₂₀ alkenyl, C₂₋₂₀ alkoxyalkyl, C₇₋₄₀ aryloxyalkyl, C₆₋₄₀ aryl, C₇₋₄₀ alkylaryl, or C₇₋₄₀ arylalkyl;
X₁ and X₂ are the same as or different from each other, and are each independently halogen, C₁₋₂₀ alkyl, C₂₋₂₀ alkenyl, C₆₋₄₀ aryl, a nitro group, an amido group, C₁₋₂₀ alkylsilyl, C₁₋₂₀ alkoxy, or C₁₋₂₀ sulfonate group;
C₁ and C₂ are the same as or different from each other, and are each independently represented by either the following Chemical Formula 2a or the following Chemical Formula 2b, provided that the case where both C₁ and C₂ are Chemical Formula 2b is excluded; 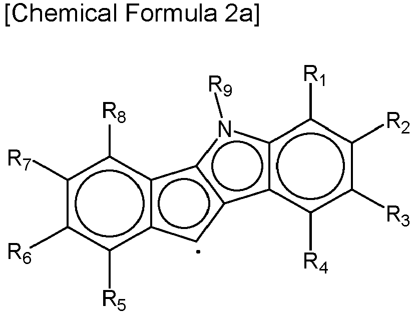 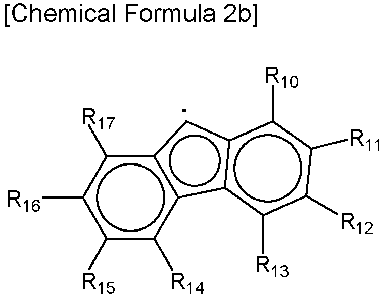 in Chemical Formulae 2a and 2b,
R₁ to R₁₇ are the same as or different from each other, and are each independently hydrogen, halogen, C₁₋₂₀ alkyl, C₁₋₂₀ haloalkyl, C₂₋₂₀ alkenyl, C₁₋₂₀ alkylsilyl, C₁₋₂₀ silylalkyl, C₁₋₂₀ alkoxysilyl, C₁₋₂₀ alkoxy, C₆₋₄₀ aryl, C₇₋₄₀ alkylaryl, or C₇₋₄₀ arylalkyl; or two or more neighboring groups of the R₁₀ to R₁₇ are connected to each other to form a substituted or unsubstituted aliphatic or aromatic ring;
   - represents the site for binding to A₁ and M₁; 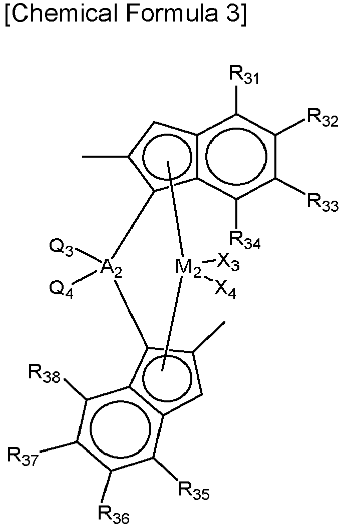
in Chemical Formula 3,
M₂ is zirconium or hafnium;
A₂ is carbon (C), silicon (Si), or germanium (Ge);
X₃ and X₄ are the same as or different from each other and are each independently halogen,
R₃₁ and R₃₅ are each phenyl substituted with C₃₋₆ branched alkyl;
R₃₂ to R₃₄ and R₃₆ to R₃₈ are the same as or different from each other, and are each independently hydrogen, halogen, C₁₋₂₀ alkyl, C₂₋₂₀ alkenyl, C₁₋₂₀ alkylsilyl, C₁₋₂₀ silylalkyl, C₁₋₂₀ alkoxysilyl, C₁₋₂₀ ether, C₁₋₂₀ silyl ether, C₁₋₂₀ alkoxy, C₆₋₄₀ aryl, C₇₋₂₀ alkylaryl, or C₇₋₂₀ arylalkyl, and
Q₃ and Q₄ are the same as each other and are C₂₋₂₀ alkyl.

Further, in Chemical Formula 1, Q₁ and Q₂ are each C₁₋₃ alkyl, or C₂₋₁₂ alkoxyalkyl, X₁ and X₂ are each halogen, and A₁ is silicon (Si).

Further, in Chemical Formula 1, R₁ to R₉ may be each hydrogen, halogen, C₁₋₁₂ linear or branched alkyl, C₁₋₁₂ linear or branched alkoxy, or C₆₋₂₀ aryl.

Further, in Chemical Formula 1, R₁₀ to R₁₇ are each hydrogen, or C₁₋₁₂ linear or branched alkyl; or two or more neighboring groups of the R₁₀ to R₁₇ may be connected to each other to form a C₆₋₂₀ aliphatic or aromatic ring, which is substituted with at least one C₁₋₃ alkyl.

Further, the first metallocene compound may be represented by any one of the following structural formulas.

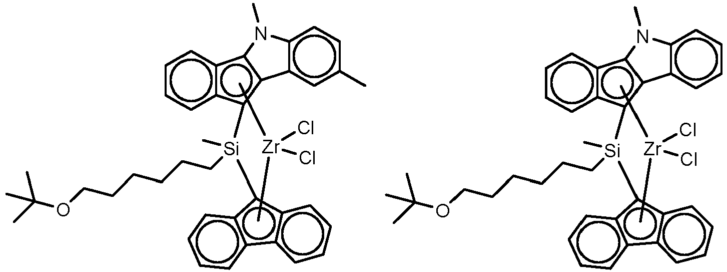

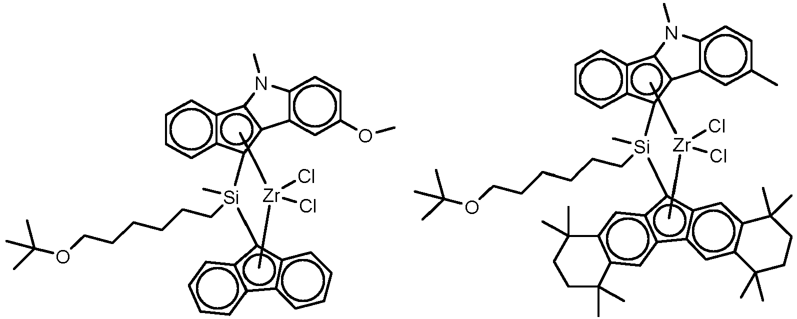

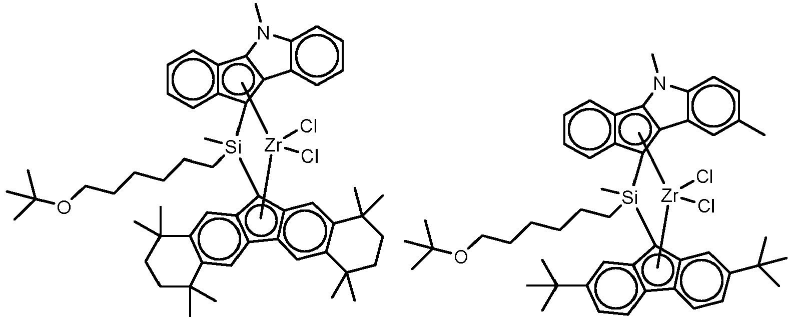

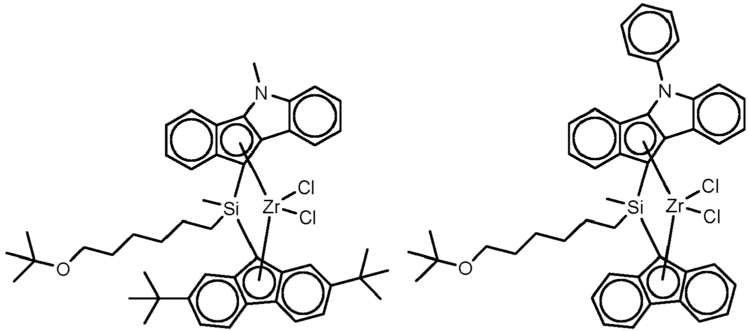

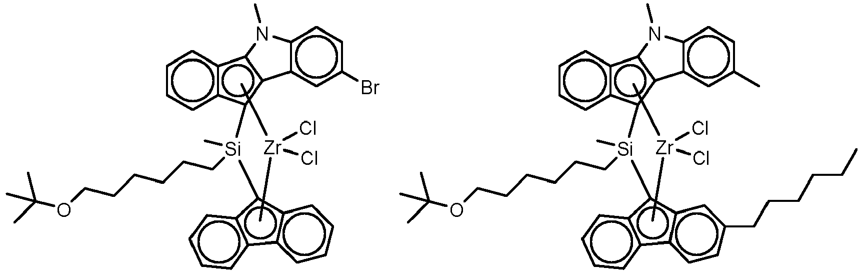

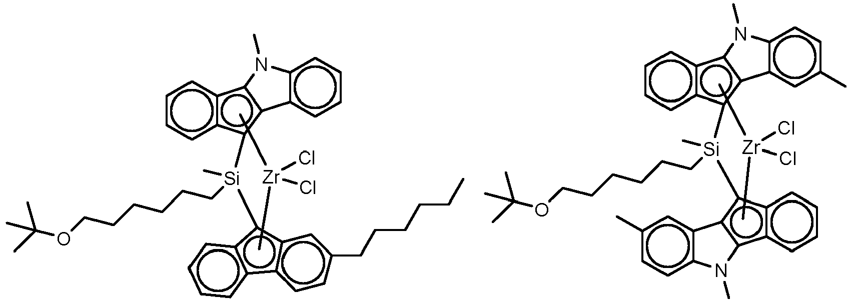

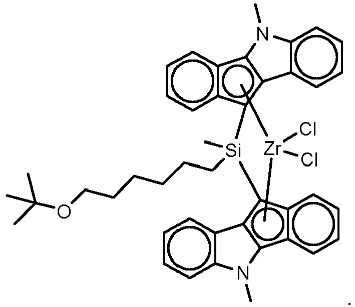

On the other hand, in Chemical Formula 3,
X₃ and X₄ may be each halogen, and A₂ may be silicon (Si).

And, in Chemical Formula 3, R₃₁ and R₃₅ are each a phenyl group substituted with C₃₋₆ branched alkyl group, preferably tert-butyl phenyl.

And, in Chemical Formula 3, Q₃ and Q₄ are the same and may be C₂₋₄ linear alkyl group, preferably ethyl.

And, in Chemical Formula 3, the second metallocene compound may be a compound represented by the following structural formula.

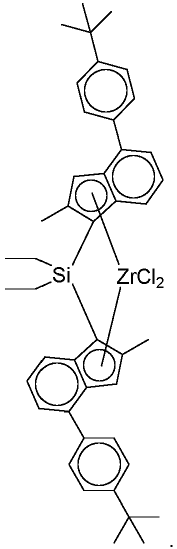

Further, the first metallocene compound and the second metallocene compound may be supported in a molar ratio of 1:1 to 1:8 based on 1 g of the support.

Further, the support may contain a hydroxyl group and a siloxane group on the surface, and preferably, it may be at least one selected from the group consisting of silica, silica-alumina and silica-magnesia.

Further, the hybrid supported metallocene catalyst of the present disclosure may further include at least one cocatalyst selected from the group consisting of compounds represented by the following Chemical Formulas 4 to 6.

[Chemical Formula 4] -[Al(R₄₁)-O]_{c}-

-in Chemical Formula 4,
each R₄₁ is independently halogen, C₁₋₂₀ alkyl or C₁₋₂₀ haloalkyl, and
c is an integer of 2 or more,

   [Chemical Formula 5] D(R₅₁)₃
in Chemical Formula 5,
D is aluminum or boron,
each R₅₁ is independently hydrogen, halogen, C₁₋₂₀ hydrocarbyl or a halogen-substituted C₁₋₂₀ hydrocarbyl,

   [Chemical Formula 6] [L-H]⁺[Q(E)₄]⁻ or [L]⁺[Q(E)₄]⁻
in Chemical Formula 6,
L is a neutral or cationic Lewis base,
[L-H]⁺ is a Bronsted (Brönsted) acid,
Q is B³⁺ or Al³⁺,
each E is independently C₆₋₄₀ aryl or C₁₋₂₀ alkyl, wherein the C₆₋₄₀ aryl or C₁₋₂₀ alkyl is unsubstituted or substituted one or more substituents selected from the group consisting of halogen, C₁₋₂₀ alkyl, C₁₋₂₀ alkoxy, and C₆₋₄₀ aryloxy.

On the other hand, the present disclosure provides a method for preparing polypropylene, comprising a step of polymerizing a propylene monomer in the presence of the above-mentioned hybrid supported metallocene catalyst.

In this case, the polypropylene may be a homopolymer, and the polypropylene may have a pentad sequence distribution measured by ¹³C-NMR analysis of 65 mmmm% or more, and a melt strength (MS) of 15 cN or more.

A singular expression includes a plural expression unless they have definitely opposite meanings in the context.

It should be understood that the terms "comprise", "include", and "have" as used herein are intended to designate the presence of stated features, numbers, steps, constitutional elements, or combinations thereof, but they do not preclude the possibility of existence or addition of one or more other features, numbers, steps, constitutional elements, or combinations thereof.

Also, as used herein, in case a layer or an element is mentioned to be formed "on" or "above" layers or elements, it means that the layer or element is directly formed on the layers or elements, or it means that other layers or elements may be additionally formed between the layers, on a subject, or on a substrate.

Hereinafter, the present disclosure will be described in detail.

According to one aspect of the present disclosure, there is provided a hybrid supported metallocene catalyst comprising at least one first metallocene compound selected from compounds represented by the following Chemical Formula 1; at least one second metallocene compound selected from compounds represented by the following Chemical Formula 3; and a support for supporting the first and second metallocene compounds; 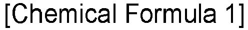 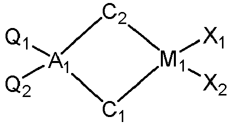 in Chemical Formula 1,
M₁ is zirconium or hafnium;
A₁ is carbon (C), silicon (Si), or germanium (Ge);
Q₁ and Q₂ are the same as or different from each other, and are each independently hydrogen, halogen, C₁₋₂₀ alkyl, C₂₋₂₀ alkenyl, C₂₋₂₀ alkoxyalkyl, C₇₋₄₀ aryloxyalkyl, C₆₋₄₀ aryl, C₇₋₄₀ alkylaryl, or C₇₋₄₀ arylalkyl;
X₁ and X₂ are the same as or different from each other, and are each independently halogen, C₁₋₂₀ alkyl, C₂₋₂₀ alkenyl, C₆₋₄₀ aryl, a nitro group, an amido group, C₁₋₂₀ alkylsilyl, C₁₋₂₀ alkoxy, or C₁₋₂₀ sulfonate group;
C₁ and C₂ are the same as or different from each other, and are each independently represented by either the following Chemical Formula 2a or the following Chemical Formula 2b, provided that the case where both C₁ and C₂ are Chemical Formula 2b is excluded; 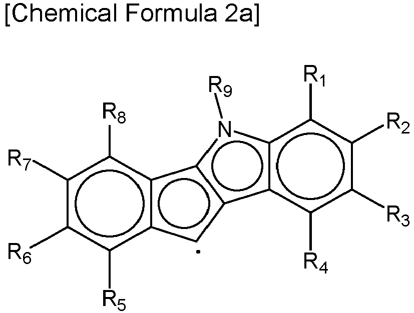 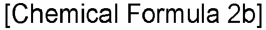 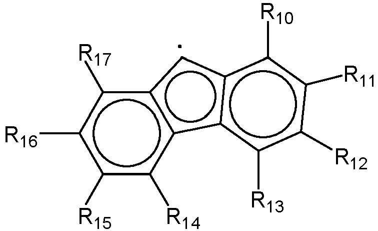
in Chemical Formulae 2a and 2b,
R₁ to R₁₇ are the same as or different from each other, and are each independently hydrogen, halogen, C₁₋₂₀ alkyl, C₂₋₂₀ haloalkyl, C₂₋₂₀ alkenyl, C₁₋₂₀ alkylsilyl, C₁₋₂₀ silylalkyl, C₁₋₂₀ alkoxysilyl, C₁₋₂₀ alkoxy, C₆₋₄₀ aryl, C₇₋₄₀ alkylaryl, or C₇₋₄₀ arylalkyl; or two or more neighboring groups of the R₁₀ to R₁₇ are connected to each other to form a substituted or unsubstituted aliphatic or aromatic ring;
• represents the site for binding to A₁ and M₁; 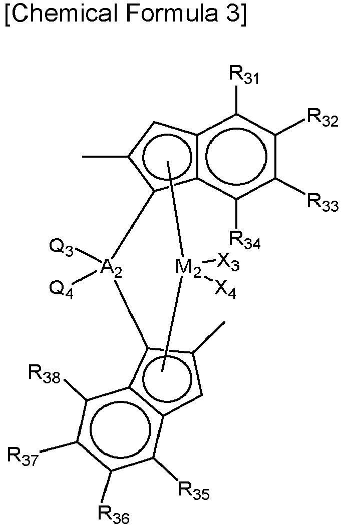
in Chemical Formula 3,
M₂ is zirconium or hafnium;
A₂ is carbon (C), silicon (Si), or germanium (Ge);
X₃ and X₄ are the same as or different from each other, and are each independently halogen,
R₃₁ and R₃₅ are each independently phenyl substituted with C₃₋₆ branched alkyl;
R₃₂ to R₃₄ and R₃₆ to R₃₈ are the same as or different from each other, and are each independently hydrogen, halogen, C₁₋₂₀ alkyl, C₂₋₂₀ alkenyl, C₁₋₂₀ alkylsilyl, C₁₋₂₀ silylalkyl, C₁₋₂₀ alkoxysilyl, C₁₋₂₀ ether, C₁₋₂₀ silylether, C₁₋₂₀ alkoxy, C₆₋₄₀ aryl, C₇₋₂₀ alkylaryl, or C₇₋₂₀ arylalkyl,
Q₃ and Q₄ are the same as each other and are C₂₋₂₀ alkyl.

Unless otherwise stated herein, the following terms may be defined as follows.

The halogen may be fluorine (F), chlorine (Cl), bromine (Br), or iodine (I).

The alkyl having 1 to 20 carbon atoms (C₁₋₂₀) can be a linear, branched or cyclic alkyl. Specifically, the alkyl having 1 to 20 carbon atoms may include a linear alkyl having 1 to 20 carbon atoms; a linear alkyl having 1 to 15 carbon atoms; a linear alkyl having 1 to 5 carbon atoms; a branched or cyclic alkyl having 3 to 20 carbon atoms; a branched or cyclic alkyl having 3 to 15 carbon atoms; or a branched or cyclic alkyl having 3 to 10 carbon atoms. As an example, the alkyl having 1 to 20 carbon atoms (C₁₋₂₀) may include methyl, ethyl, propyl, isopropyl, n-butyl, tert-butyl, pentyl, hexyl, heptyl, octyl, cyclopropyl, cyclobutyl, cyclopentyl, cyclohexyl, cycloheptyl, cyclooctyl, but is not limited thereto.

The alkenyl having 2 to 20 carbon atoms (C₂₋₂₀) may include a linear or branched alkenyl, and specifically, it may include allyl, ethenyl, propenyl, butenyl, or pentenyl, , but is not limited thereto.

The alkoxy having 1 to 20 carbon atoms (C₁₋₂₀) may include a methoxy group, ethoxy, isopropoxy, n-butoxy, tert-butoxy, or cyclohexyloxy, but is not limited thereto.

The alkoxyalkyl group having 2 to 20 carbon atoms (C₂₋₂₀) is a functional group in which one or more hydrogens of the aforementioned alkyl are substituted with an alkoxy, and specifically, it may include alkoxyalkyl such as methoxymethyl, methoxyethyl, ethoxymethyl, iso-propoxymethyl, iso-propoxyethyl, iso-propoxypropyl, iso-propoxyhexyl, tert-butoxymethyl, tert-butoxyethyl, tert-butoxypropyl, tert-butoxyhexyl, but is not limited thereto.

The aryloxy having 6 to 40 carbon atoms (C₆₋₄₀) may include phenoxy, biphenoxyl, or naphthoxy, but is not limited thereto.

The aryloxyalkyl group having 7 to 40 carbon atoms (C₇₋₄₀) is a functional group in which one or more hydrogens of the aforementioned alkyl are substituted with an aryloxy, and specifically, it may include phenoxymethyl, phenoxyethyl, or phenoxyhexyl, but is not limited thereto.

The alkylsilyl having 1 to 20 carbon atoms (C₁₋₂₀) or the alkoxysilyl group having 1 to 20 carbon atoms (C₁₋₂₀) is a functional group in which 1 to 3 hydrogens of -SiH₃ are substituted with 1 to 3 alkyl or alkoxy as described above, and specifically, it may include alkylsilyl, such as methylsilyl, dimethylsilyl, trimethylsilyl, dimethylethylsilyl, diethylmethylsilyl group, or dimethylpropylsilyl; alkoxysilyl such as methoxysilyl, dimethoxysilyl, trimethoxysilyl or dimethoxyethoxysilyl; alkoxyalkylsilyl such as methoxydimethylsilyl, diethoxymethylsilyl or dimethoxypropylsilyl, but is not limited thereto.

The silylalkyl having 1 to 20 carbon atoms (C₁₋₂₀) is a functional group in which one or more hydrogens of the alkyl as described above are substituted with silyl, and specifically, it may include -CH₂-SiH₃, methylsilylmethyl, or dimethylethoxysilylpropyl, but is not limited thereto.

Further, the alkylene having 1 to 20 carbon atoms (C₁₋₂₀) is the same as the above-mentioned alkyl except that it is a divalent substituent, and specifically, it may include methylene, ethylene, propylene, butylene, pentylene, hexylene, heptylene, octylene, cyclopropylene, cyclobutylene, cyclopentylene, cyclohexylene, cycloheptylene, or cyclooctylene, but is not limited thereto.

The aryl having 6 to 20 carbon atoms (C₆₋₂₀) may be a monocyclic, bicyclic or tricyclic aromatic hydrocarbon. As one example, the aryl having 6 to 20 carbon atoms (C₆₋₂₀) may include phenyl, biphenyl, naphthyl, anthracenyl, phenanthrenyl, or fluorenyl, but is not limited thereto.

The alkylaryl having 7 to 20 carbon atoms (C₇₋₂₀) may mean a substituent in which one or more hydrogens among hydrogens of an aromatic ring are substituted with the aforementioned alkyl. As an example, the alkylaryl having 7 to 20 carbon atoms (C₇₋₂₀) may include methylphenyl, ethylphenyl, methylbiphenyl, or methylnaphthyl, but is not limited to thereto.

The arylalkyl having 7 to 20 carbon atoms (C₇₋₂₀) may mean a substituent in which one or more hydrogens of the aforementioned alkyl are substituted with the aforementioned aryl. As an example, the arylalkyl having 7 to 20 carbon atoms (C₇₋₂₀) may include phenylmethyl, phenylethyl, biphenylmethyl, or naphthylmethyl, but is not limited thereto.

Further, the arylene having 6 to 20 carbon atoms (C₆₋₂₀) is the same as the aforementioned aryl except that it is a divalent substituent, and specifically, it may include phenylene, biphenylene, naphthylene, anthracenylene, phenanthrenylene, or fluorenylene, but is not limited thereto.

Further, the Group 13 element may be boron (B), aluminum (Al), gallium (Ga), indium (In), or thallium (Tl), and specifically, it may be boron (B) or aluminum (Al), but is not limited thereto.

The above-mentioned substituents may be optionally substituted with one or more substituents selected from the group consisting of a hydroxyl group; a halogen; an alkyl or alkenyl, aryl, alkoxy; an alkyl or alkenyl, aryl, alkoxy containing one or more heteroatoms among heteroatoms of Groups 14 to 16; silyl; alkylsilyl or alkoxysilyl; a phosphine group; a phosphide group; a sulfonate group; and a sulfonic group.

On the other hand, the hybrid supported catalyst of the present disclosure hybrid-supports a first metallocene compound forming a double bond at the terminal and a second metallocene compound having a high molecular weight characteristic during propylene polymerization, thus exhibiting high activity in propylene polymerization, and also has a feature useful for the preparation of polypropylene having a high melt tension by introducing long chain branches (LCB) into polypropylene molecules.

Specifically, the first metallocene compound of Chemical Formula 1 forms a structure in which an indeno indole derivative and one of an indeno indole derivative or a fluorene derivative are crosslinked by a bridge group. Thus, in the first metallocene compound, such a bulky group can provide an appropriate steric hindrance to obtain a reaction control effect. Further, since the indenoindole ligand structure has an unshared electron pair of a hetero atom, namely, nitrogen, such a bulky group can stabilize the vacant site of the transition metal contained in the bridge group. Thereby, the compound can induce beta-hydride elimination of the polymer chain to form a macromer having a double bond at the terminal of the polymer chain, and then to introduce long chain branches (LCB) into polypropylene molecules.

Further, the second metallocene compound represented by Chemical Formula 3 includes a divalent functional group A₂ bi-substituted with the same alkyl group having 2 or more carbon atoms as a bridge group connecting two ligands including an indenyl group, and thus has a larger atomic size than a conventional carbon bridge, so that the monomer is readily accessible as the usable angle increases, thereby exhibiting more excellent catalytic activity. In particular, since the second metallocene compound represented by Chemical Formula 3 has excellent stereoregularity than the first metallocene compound represented by Chemical Formula 1, it is suitable for propylene polymerization, has excellent catalytic activity, and thus can play a role in polymerizing polymer chains having a high molecular weight.

Therefore, the hybrid supported metallocene catalyst further includes the second metallocene compound in addition to the first metallocene compound, that is, contains at least two or more different types of metallocene compounds, so that it exhibits a high activity in polymerization of propylene and can prepare polypropylene with excellent physical properties, especially improved melt tension through the introduction of long chain branches (LCB) into polypropylene molecules.

Specifically, the first metallocene compound of Chemical Formula 1 may be selected from compounds represented by the following Chemical Formula 1-1 or Chemical Formula 1-2. 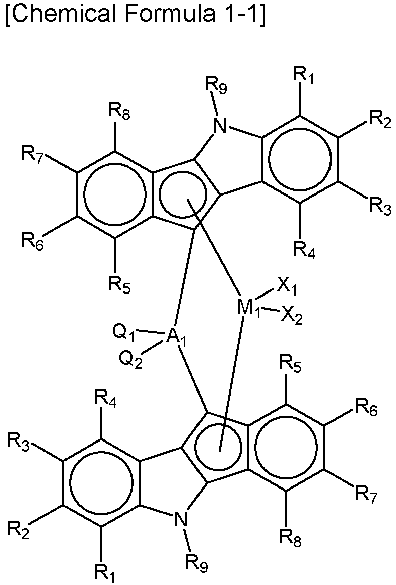 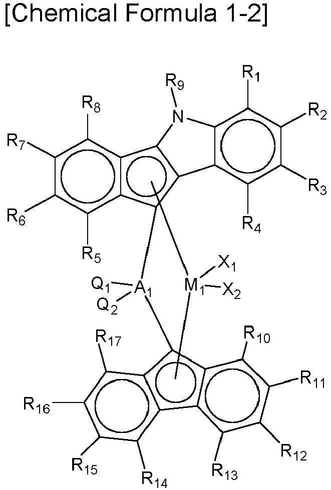 in Chemical Formulas 1-1 and 1-2,
Q₁, Q₂, A₁, M₁, X₁, X₂, and R₁ to R₁₇ are the same as those defined in relation to Chemical Formula 1.

Further, in Chemical Formula 1, Q₁ and Q₂ is each C₁₋₃ alkyl, or C₂₋₁₂ alkoxyalkyl, and preferably, each may be methyl or t-butoxyhexyl.

Further, X₁ and X₂ may be each halogen, preferably chlorine.

Further, A₁ may be silicon (Si).

Further, M₁ is zirconium (Zr) or hafnium (Hf), preferably zirconium (Zr).

Further, in Chemical Formula 1, R₁ to R₉ may be each hydrogen, halogen, C₁₋₁₂ linear or branched alkyl, C₁₋₁₂ linear or branched alkoxy, or C₆₋₂₀ aryl.

Specifically, R₃ may be hydrogen; a halogen; C₁₋₆ linear or branched alkyl, or C₁₋₃ linear or branched alkyl; or C₁₋₆ linear or branched alkoxy, or C₁₋₃ linear or branched alkoxy. Preferably, R₃ may be hydrogen, bromine, methyl, or methoxy. And, R₉ may be C₁₋₆ linear or branched alkyl, or C₁₋₃ linear or branched alkyl; or C₆₋₂₀ aryl, or C₆₋₁₂ aryl. Preferably, R₉ may be methyl or phenyl. In addition, the remaining R₁, R₂, R₄ to R₈ may be hydrogen.

Further, in Chemical Formula 1, R₁₀ to R₁₇ are each hydrogen; C₁₋₁₂ linear or branched alkyl, or C₁₋₆ linear or branched alkyl, and preferably, may be hydrogen, methyl, ethyl, propyl, n-butyl, t-butyl, pentyl, or hexyl, or alternatively, may be hydrogen, t-butyl, or hexyl.

Alternatively, in Chemical Formula 1, two or more neighboring groups of the R₁₀ to R₁₇ may be connected to each other to form C₆₋₂₀ aliphatic or aromatic ring wherein at least one C₁₋₃ alkyl is substituted. Specifically, the R₁₁, R₁₂ and R₁₅, R₁₆ may be connected to each other to form C₆₋₁₂ aliphatic or aromatic ring substituted with at least one C₁₋₃ alkyl. In one example, two or more neighboring groups of the R₁₀ to R₁₇ may be connected to each other to form C₆₋₁₂ aliphatic or aromatic ring, preferably cyclohexyl or phenyl. Further, the aliphatic or aromatic ring may be substituted with at least one or 1 to 8 or 1 to 4 of the C₁₋₃ alkyl. At this time, the C₁₋₃ alkyl may be methyl, ethyl, or propyl, preferably methyl.

Specifically, the first metallocene compound may be a compound represented by any one of the following Chemical Formulas 1-3 to 1-5. 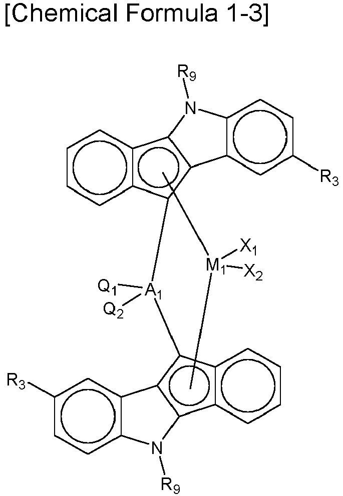 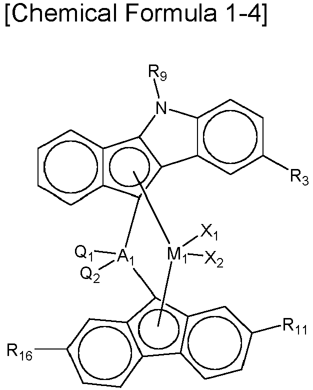 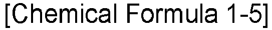 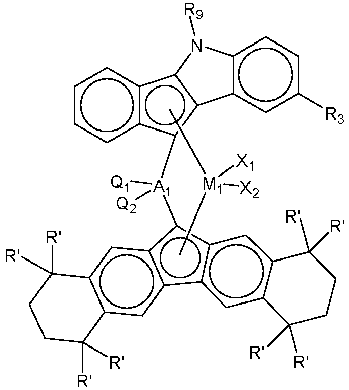 in Chemical Formulas 1-3 to 1-5,
Q₁, Q₂, A₁, M₁, X₁, X₂, R₃, R₉, R₁₁, and R₁₆ are the same as those defined in relation to Chemical Formula 1,
R' may be C₁₋₃ alkyl, specifically, methyl, ethyl, or propyl, and preferably methyl.

In addition, the first metallocene compound may be represented by one of the following structural formulas.

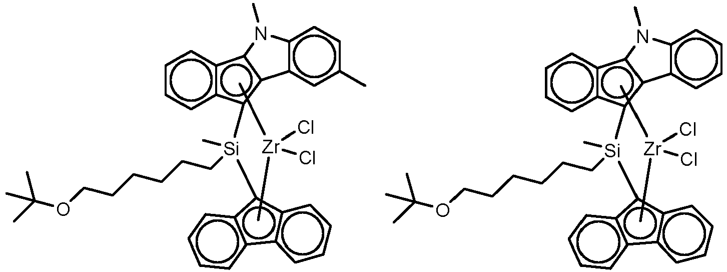

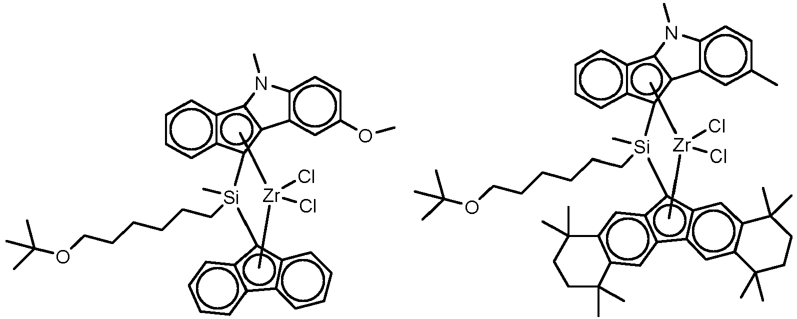

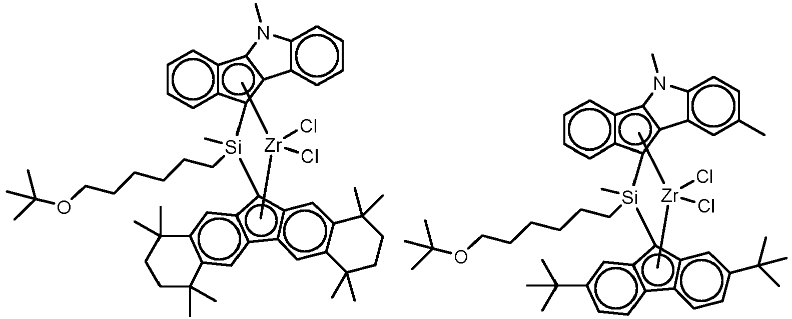

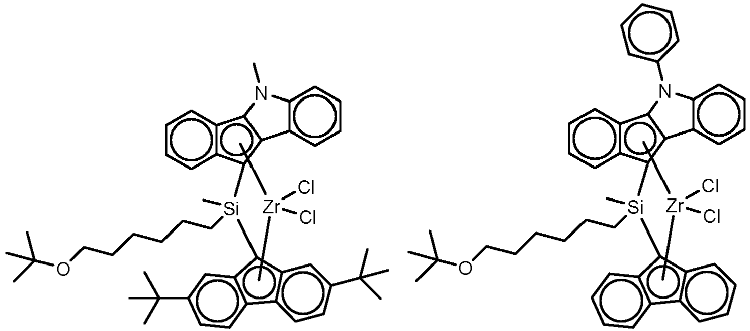

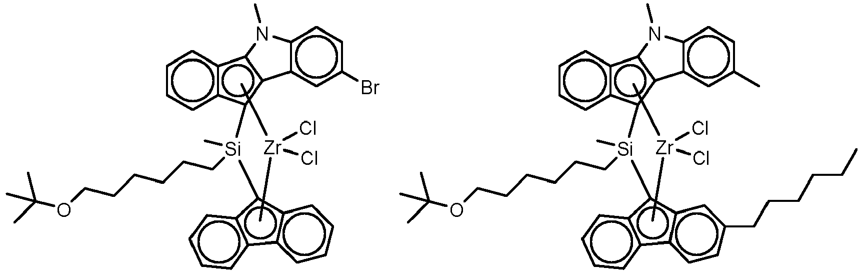

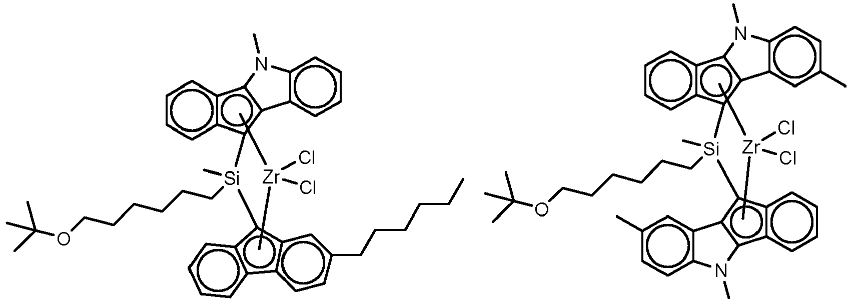

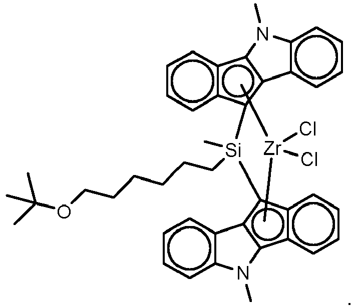

Meanwhile, the hybrid supported metallocene catalyst of the present disclosure includes at least one second metallocene compound selected from the compounds represented by Chemical Formula 3 together with at least one first metallocene compound as described above.

Specifically, in Chemical Formula 3, X₃ and X₄ are each halogen, and preferably chlorine.

Further, A₂ may be silicon (Si).

Further, M₂ is zirconium (Zr) or hafnium (Hf), preferably zirconium (Zr).

Further, in Chemical Formula 3, the R₃₁ and R₃₅ are each a phenyl group substituted with C₃₋₆ branched alkyl group, preferably tert-butyl phenyl.

Further, in Chemical Formula 3, Q₃ and Q₄ may be the same as each other, and may be C₂₋₄ linear alkyl group, preferably ethyl.

Specifically, in Chemical Formula 3, the second metallocene compound may include a compound represented by the following structural formula, but is not limited thereto.

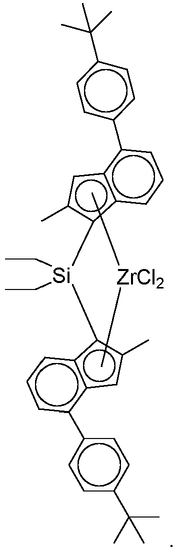

Meanwhile, in the present disclosure, each of the first metallocene compound and the first metallocene compound may be a meso isomer, a racemic isomer, or a mixed form thereof.

As used herein, the term "racemic form" or "racemate" or "racemic isomer" means a form in which the same substituents on the two cyclopentadienyl moieties are on the opposite side to the plane containing the transition metal represented by M₁ or M₂ in Chemical Formula 1 or Chemical Formula 3 and the center of the cyclopentadienyl moiety.

As used herein, the term ""meso form" or "meso isomer" is a stereoisomer of the above-mentioned racemic isomer, and means a form in which the same substituents on the two cyclopentadienyl moieties are on the same side to the plane containing the transition metal represented by M₁ or M₂ in Chemical Formula 1 or Chemical Formula 3, and the center of the cyclopentadienyl moiety.

In the hybrid supported metallocene catalyst of the present disclosure, the first metallocene compound and the second metallocene compound may be supported in a molar ratio of 1:1 to 1:8. When the supporting ratio is less than 1:1, only the first metallocene compound plays a leading role, the stereoregularity at the time of propylene polymerization is remarkably deteriorated, it becomes highly sticky, which can make the polymer formation itself difficult. In addition, when the supporting ratio exceeds 1:8, only the second metallocene compound plays a leading role, the content of long chain branch (LCB) in the polypropylene molecule is reduced, and thus the melt tension may be lowered.

Specifically, a hybrid supported metallocene catalyst, in which the first metallocene compound and the second metallocene compound are supported in a molar ratio of 1:1.5 to 1:6, or a molar ratio of 1:2 to 1:5, exhibits a high activity in propylene polymerization, and is desirable because it can prepare polypropylene with excellent physical properties, particularly improved melt tension, through the introduction of long chain branches (LCB) into polypropylene molecules.

That is, in the case of the hybrid supported metallocene catalyst of the present disclosure in which the first metallocene compound and the second metallocene compound are supported in the above molar ratio, the melt tension of polypropylene can be further improved due to the interaction of two or more catalysts.

In the hybrid supported metallocene catalyst of the present disclosure, a support containing a hydroxyl group on the surface may be used as a support for supporting the first metallocene compound and the second metallocene compound, and preferably, it may contain a hydroxyl group and a siloxane group having high reactivity on the surface, which is dried to remove water on the surface.

For example, silica, silica-alumina, and silica-magnesia dried at a high temperature may be used. These carriers may usually include oxide, carbonate, sulfate, and nitrate components such as Na₂O, K₂CO₃, BaSO₄, or Mg(NO₃)₂,.

The drying temperature of the support is preferably 200°C to 800°C, more preferably 300°C to 600°C, and most preferably 300°C to 400°C. When the drying temperature of the support is less than 200°C, it has water too much so that the water on the surface reacts with a cocatalyst described later. In addition, when the drying temperature of the support is too low as described above, the supporting rate of the cocatalyst may be relatively high due to the excessive presence of the hydroxyl group, which will require a large amount of cocatalyst. On the other hand, when the drying temperature of the support exceeds 800°C, the surface area is reduced while pores on the surface of the support are aligned. Further, many hydroxyl groups are lost on the surface, and only siloxane remains, thereby decreasing reaction site with the cocatalyst, which is not preferable.

The amount of a hydroxyl group on the surface of the support is preferably 0.1 mmol/g to 10 mmol/g, and more preferably 0.5 mmol/g to 5 mmol/g. The amount of a hydroxyl group on the surface of the support can be adjusted by the method and conditions for producing the support or drying conditions, such as temperature, time, vacuum or spray drying.

When the amount of the hydroxyl group is less than 0.1 mmol/g, the reaction site with the cocatalyst is small. When the amount of the hydroxyl group exceeds 10 mmol/g, it may be caused by water other than the hydroxyl group present on the surface of the support particle, which is not preferable.

Further, the hybrid supported metallocene catalyst may be one in which at least one first metallocene compound and at least one second metallocene compound are supported on a support together with a cocatalyst compound. The cocatalyst can be used without limitation as long as it is a cocatalyst used at the time of polymerizing olefins under a general metallocene catalyst. This cocatalyst allows a bond to be formed between the hydroxyl group on the support and the Group 13 transition metal. In addition, the cocatalyst is present only on the surface of the support, and thus, it can contribute to securing the unique properties possessed by the specific hybrid catalyst configuration of the present disclosure, without a fouling phenomenon in which the polymer particles are entangled with each other or on the walls of the reactor.

Specifically, the hybrid supported metallocene catalyst may further include at least one cocatalyst selected from the group consisting of compounds represented by the following Chemical Formulas 4 to 6:

[Chemical Formula 4] -[Al(R₄₁)-O]_{c}-

-in Chemical Formula 4,
each R₄₁ is independently halogen, C₁₋₂₀ alkyl or C₁₋₂₀ haloalkyl, and
c is an integer of 2 or more,

   [Chemical Formula 5] D(R₅₁)₃
in Chemical Formula 5,
D is aluminum or boron,
each R₅₁ is independently hydrogen, halogen, C₁₋₂₀ hydrocarbyl or a halogen-substituted C₁₋₂₀ hydrocarbyl,

   [Chemical Formula 6] [L-H]⁺[Q(E)₄]⁻ or [L]⁺[Q(E)₄]⁻
in Chemical Formula 6,
L is a neutral or cationic Lewis base,
[L-H]⁺ is a Bronsted (Brönsted) acid,
Q is B³⁺ or Al³⁺,
each E is independently C₆₋₄₀ aryl or C₁₋₂₀ alkyl, wherein the C₆₋₄₀ aryl or the C₁₋₂₀ alkyl is unsubstituted or substituted one or more substituents selected from the group consisting of halogen, C₁₋₂₀ alkyl, C₁₋₂₀ alkoxy, and C₆₋₄₀ aryloxy.

The compound represented by Chemical Formula 4 may be, for example, an alkylaluminoxane such as modified methylaluminoxane (MMAO), methylaluminoxane (MAO), ethyl aluminoxane, isobutyl aluminoxane, or butylaluminoxane.

The alkyl metal compound represented by Chemical Formula 5 may be, for example, trimethylaluminum, triethyl aluminum, triisobutyl aluminum, tripropyl aluminum, tributyl aluminum, dimethylchloroaluminum, dimethylisobutylaluminum, dimethylethylaluminum, diethylchloroaluminum, triisopropyl aluminum, tri-s-butyl aluminum, tricyclopentyl aluminum, tripentyl aluminum, triisopentyl aluminum, trihexyl aluminum, ethyl dimethyl aluminum, methyl diethyl aluminum, triphenyl aluminum, tri-p-tolyl aluminum, dimethyl aluminum methoxide, dimethyl aluminum ethoxide, trimethylboron, triethylboron, triisobutylboron, tripropyl boron, and tributyl boron.

The compound represented by Chemical Formula 6 may include, for example, triethylammoniumtetraphenylboron, tributylammoniumtetraphenylboron, trimethylammoniumtetraphenylboron, tripropylammoniumtetraphenylboron, trimethylammoniumtetra(p-tolyl)boron, tripropylammoniumtetra(p-tolyl)boron, triethylammoniumtetra(o,p-dimethylphenyl)boron, trimethylammoniumtetra(o,p-dimethylphenyl)boron, tributylammoniumtetra(p-trifluoromethylphenyl)boron, trimethylammoniumtetra(p-trifluoromethylphenyl)boron, tributylammoniumtetrapentafluorophenylboron, N,N-diethylaniliniumtetraphenylboron, N,N-diethylaniliniumtetrapentafluorophenylboron, diethylammoniumtetrapentafluorophenylboron, triphenylphosphoniumtetraphenylboron, trimethylphosphoniumtetraphenylboron, triethylammoniumtetraphenylaluminum, tributylammoniumtetraphenylaluminum, trimethylammoniumtetraphenylaluminum, tripropylammoniumtetraphenylaluminum, trimethylammoniumtetra(p-tolyl)aluminum, tripropylammoniumtetra(p-tolyl)aluminum, triethylammoniumtetra(o,p-dimethylphenyl)aluminum, tributylammoniumtetra(p-trifluoromethylphenyl)aluminum, trimethylammoniumtetra(p-trifluoromethylphenyl)aluminum, tributylammoniumtetrapentafluorophenylaluminum, N,N-diethylaniliniumtetraphenylaluminum, N,N-diethylaniliniumtetrapentafluorophenylaluminum, diethylammoniumtetrapentatetraphenylaluminum, triphenylphosphoniumtetraphenylaluminum, trimethylphosphoniumtetraphenylaluminum, triphenylcarboniumtetraphenylboron, triphenylcarboniumtetraphenylaluminum, triphenylcarboniumtetra(p-trifluoromethylphenyl)boron, and triphenylcarboniumtetrapentafluorophenylboron.

Further, the hybrid supported metallocene catalyst may include the cocatalyst and the first metallocene compound in a molar ratio of 1:1 to 1:10000, preferably in a molar ratio of 1:1 to 1:1000 and more preferably in a molar ratio of 1:10 to 1:100.

Further, the hybrid supported metallocene catalyst may also include the cocatalyst and the second metallocene compound in a molar ratio of 1:1 to 1:10000, preferably in a molar ratio of 1:1 to 1:1000, and more preferably in a molar ratio of 1:10 to 1:100.

At this time, when the molar ratio is less than 1, the metal content of the cocatalyst is too low to well form the catalytically active species, so the activity may be reduced. When the molar ratio exceeds 10000, the metal of the cocatalyst may rather function as a catalytic poison.

The supporting amount of the cocatalyst may be from 5 mmol to 20 mmol based on 1 g of the support.

On the other hand, the hybrid supported metallocene catalyst can be prepared by a preparation method which comprises: a step of supporting a cocatalyst on a support; a step of supporting a first metallocene compound on the support on which the cocatalyst is supported; and a step of supporting a second metallocene compound on the support on which the cocatalyst and the first metallocene compound are supported.

Alternatively, the hybrid supported metallocene catalyst can be prepared by a preparation method which comprises a step of supporting a cocatalyst on a support; a step of supporting a second metallocene compound on the support on which the cocatalyst is supported; and a step of supporting the first metallocene compound on the support on which the cocatalyst and the second metallocene compound are supported.

Further alternatively, the hybrid supported metallocene catalyst can be prepared by a preparation method which comprises a step of supporting a first metallocene compound on a support; a step of supporting a cocatalyst on the support on which the first metallocene compound is supported; and a step of supporting a second metallocene compound on the support on which the cocatalyst and the first metallocene compound are supported.

In the above method, the supporting conditions are not particularly limited, and the method can be performed within a range well known to those skilled in the art. For example, the method can proceed by appropriately using high-temperature supporting and low-temperature supporting, and for example, the supporting temperature may range from -30°C to 150°C, preferably from 50°C to 98°C, or from 55°C to 95°C. The supporting time may be appropriately adjusted according to the amount of the first metallocene compound to be supported. Before using the supported catalyst reacted in this way, the reaction solvent may be removed through filtration or distillation under reduced pressure, and alternatively, when needed, the supported additive catalyst can be subjected to Soxhlet filtration using an aromatic hydrocarbon, such as toluene.

Further, the preparation of the supported catalyst can be performed in the presence of a solvent or in the absence of a solvent. When a solvent is used, usable solvents may include an aliphatic hydrocarbon solvent such as hexane or pentane, an aromatic hydrocarbon solvent such as toluene or benzene, a hydrocarbon solvent substituted with a chlorine atom, such as dichloromethane; an ether-based solvent such as diethyl ether or tetrahydrofuran(THF), most organic solvents such as acetone or ethyl acetate. Hexane, heptane, toluene, or dichloromethane is preferred.

In the method for preparing the metallocene compound or the supported catalyst of the present disclosure, the equivalent (eq) means a molar equivalent (eq/mol).

On the other hand, the present disclosure provides a method for preparing polypropylene comprising a step of polymerizing a propylene monomer in the presence of the hybrid supported metallocene catalyst.

The polymerization reaction may be performed by singly polymerizing propylene using a continuous slurry polymerization reactor, a loop slurry reactor, a gas phase reactor or a solution reactor.

And, the polymerization temperature may be 25°C to 500°C, or 25°C to 300°C, or 30°C to 200°C, or 50°C to 150°C, or 60°C to 120°C. Further, the polymerization pressure may be 1 kgf/cm² to 100 kgf/cm², or 1 kgf/cm² to 50 kgf/cm², or 5 kgf/cm² to 45 kgf/cm², or 10 kgf/cm² to 40 kgf/cm², or 15 kgf/cm² to 35 kgf/cm².

The supported metallocene catalyst can be injected by dissolving or diluting in an aliphatic hydrocarbon solvent having 5 to 12 carbon atoms, such as pentane, hexane, heptane, nonane, decane, and an isomer thereof, an aromatic hydrocarbon solvent such as toluene and benzene, a hydrocarbon solvent substituted with chlorine atom such as dichloromethane or chlorobenzene. Here, the solvent is preferably used after treating with a small amount of alkylaluminum to remove a small amount of water, and air that function as a catalytic poison, and a cocatalyst can be further used.

In particular, the hybrid supported metallocene catalyst composition according to the present disclosure exhibits high activity in propylene polymerization, and also is useful for the preparation of polypropylene having excellent physical properties, especially improved melt tension through the introduction of long chain branches (LCB) into polypropylene molecules. Specifically, by using the catalyst precursor of Chemical Formula 1 for the synthesis of macromer forming a double bond at the terminal together with the catalyst precursor of Chemical Formula 3 showing high molecular weight properties during propylene polymerization, it has an advantage in securing a high melt tension through the introduction of long chain branches (LCB) into the molecules.

In one example, the polymerization step can be performed by adding hydrogen gas at 1500 ppm or less, or 200 ppm to 1500 ppm, 1000 ppm or less, or 250 ppm to 1000 ppm, or 850 ppm or less, or 300 ppm to 850 ppm based on the propylene monomer content.

In such propylene polymerization step, the transition metal compound of the present disclosure can exhibit high catalytic activity. In one example, the catalyst activity during propylene polymerization may be 7 kg PP/g • cat • hr or more, or 7 kg PP/g • cat • hr to 50 kg PP/g • cat • hr, specifically 7.5 kg PP/g • cat • hr or more, or 7.5 kg PP/g • cat • hr to 35 kg PP/g • cat • hr, as calculated by the ratio of the weight (kg PP) of polypropylene produced per the mass (g) of the supported catalyst used relative to the unit time (h).

Further, the polymerization step may be a homopolymerization reaction in which the propylene monomer is solely polymerized.

As described above, the polypropylene according to the present disclosure may be prepared by polymerizing propylene using the supported metallocene catalyst described above.

In this case, the polypropylene prepared may be a homopolymer.

Further, the polypropylene may have a molecular weight distribution (Mw/Mn) of 4.2 or less, or 1.5 to 4.2. Specifically, the molecular weight distribution (Mw/Mn) of the polypropylene may be 4 or less or 1.8 to 4, or 3.5 or less, or 2 to 3.5, or 3.3 or less, or 2.7 to 3.3, or 3.2 or less, or 2.9 to 3.2.

The molecular weight distribution (Mw/Mn) of the polypropylene can be determined by measuring the weight average molecular weight (Mw) and the number average molecular weight (Mn) of the polymer using a gel permeation chromatography (GPC, manufactured by Waters) and then dividing the weight average molecular weight by the number average molecular weight.

Specifically, Waters PL-GPC220 instrument may be used as the gel permeation chromatography (GPC) instrument, and a Polymer Laboratories PLgel MIX-B 300 mm length column may be used. At this time, the measurement temperature may be 160°C, 1,2,4-trichlorobenzene can be used as a solvent, and the flow rate can be applied at 1 mL/min. Each polypropylene sample may be pretreated by dissolving it in 1,2,4-trichlorobenzene containing 0.0125% BHT at 160°C for 10 hours using a GPC analyzer (PL-GP220), prepared to a concentration of 10 mg/10 mL, and then supplied in an amount of 200 µL. In addition, the values of Mw and Mn can be derived using a calibration curve formed using a polystyrene standard specimen. 9 kinds of the polystyrene standard specimens are used with the weight average molecular weight of 2000 g/mol, 10000 g/mol, 30000 g/mol, 70000 g/mol, 200000 g/mol, 700000 g/mol, 2000000 g/mol, 4000000 g/mol, 10000000 g/mol.

In particular, the polypropylene may have a weight average molecular weight (Mw) of 100000 g/mol or more, or 100000 g/mol to 800000 g/mol, as measured by the method as described above. Specifically, the weight average molecular weight of the polypropylene may be 150000 g/mol or more, or 150000 g/mol to 700000 g/mol, or abot 200000 g/mol or more, or 200000 g/mol to 800000 g/mol.

The polypropylene of the present disclosure can ensure high melt tension through the introduction of long chain branches (LCB) into polypropylene molecules using a catalyst in which a first metallocene compound and a second metallocene compound having specific substituents and structures are hybrid-supported, as described above. Further, the polypropylene can be produced into products of various melt indices (MFR, MI) according to its application to products.

The polypropylene may have a melting point (Tm) of 140°C or more or 140°C to 165°C. Specifically, the melting point (Tm) of the polypropylene may be 150°C or more, or 150°C to 160°C, or 152°C or more or 152°C to 158°C, or 153°C or more, or 153°C to 155°C.

In one example, the melting point (Tm) of the polypropylene may be measured using Differential Scanning Calorimeter (DSC, device name: DSC 2920, manufacturer: TA instrument). Specifically, the temperature was increased and the polymer was heated up to 220°C, and then maintained at the same temperature for 5 minutes. After cooling down up to 20°C, the temperature was again increased, and the temperature corresponding to the peak of the DSC (Differential Scanning Calorimeter, manufactured by TA) curve is assumed to be the melting point (Tm). At this time, the increasing speed and the lowering speed of the temperature may be applied to 10°C/min, and the melting point is shown by the result measured in the section where the second temperature increases.

Further, the polypropylene may have a melt index (MI_{2.16}) of 0.25 g/10min to 150 g/10min as measured at 230°C under a load of 2.16 kg according to the American Society for Testing and Materials standard ASTM D 1238. Specifically, the melt index (MI_{2.16}) of the polypropylene may be 1.0 g/10min to 60 g/10min, or 1.3 g/10 min to 25 g/10 min, or 1.5 g/10 min to 25 g/10 min, or 1.5 g/10 min to 15 g/10 min.

Further, the polypropylene may have a pentad sequence distribution measured by 13C-NMR analysis described herein, of 65 mmmm% or more, or 65 mmmm% to 98 mmmm%. Specifically, the pentad sequence distribution of the polypropylene may be 70 mmmm% or more, or 70 mmmm% to 95 mmmm%, or 72 mmmm% or more, or 72 mmmm% to 90 mmmm%.

The pentad sequence distribution of the polypropylene is measured using quantitative nuclear magnetic resonance (NMR) spectroscopy as in the paper, V. Busico and R. Cipullo, Progress in Polymer Science, 2001, 26, 443-533. For a specific measurement method, refers to Experimental Example 1 described later.

Specifically, the pentad sequence distribution of polypropylene is measured at the pentad level by ¹³C-NMR analysis and is a value expressed as the percentage of isotactic pentad (mmmm) sequences with respect to all pentad sequences. The mmmm% is a value based on moles.

Bruker's 500 MHz NMR is as a measuring device, polypropylene is dissolved in 1.1.2.2-tetrachloroethane (TCE-d₂) solvent, and the pentad sequence distribution of polypropylene is measured at an absolute temperature of 393K (¹³C; pulse sequence=zgig30, ns=4096, d₁=10 sec, ¹H; pulse sequence=zg30, ns =128, d₁=3 sec). The pentad sequence distribution is analyzed with reference to the analysis method AMT-3989-0k, and the pentad sequence distribution (mmmm%) is calculated based on the paper, V. Busico and R. Cipullo, Progress in Polymer Science, 2001, 26, 443-533.

Further, the polypropylene may have a melt strength (MS) of 15 cN or more, for example, 15 cN to 150 cN. Specifically, the melt strength of polypropylene may be 18 cN or more or 18 cN to 120 cN, or 19 cN or more or 19 cN to 80 cN, or 20 cN or more, or 20 cN to 50 cN, or 23 cN or more or 23 cN to 50 cN.

The melt strength (MS) of polypropylene is measured using a capillary rheometer (manufactured by Gottfert, device name: Rheo-tester 2000). Specifically, a polypropylene sample is connected to Rheotens for a capillary rheometer (Rheo-tester 2000 from Gottfert), a polypropylene pellet resin is placed in a capillary die at a temperature of 200°C, and melted for 5 minutes. Then, the resin that comes out constantly at an extrusion rate of 22 g/min is measured through the Rheotens. The maximum tensile stress until the resulting resin filament breaks is expressed as melt strength. At this time, the capillary die standard is 4 mm in diameter, 25 mm in length and Lo/Do = 6.25, the distance from the capillary die to the Rheotens wheel is 80 mm, and the wheel acceleration can be applied at 1.2 cm/sec². For a specific measurement method, refers to Experimental Example 1 described later.

On the other hand, the polypropylene of the present disclosure exhibits high catalytic activity in the polymerization process using a hybrid supported metallocene catalyst in which two or more metallocene compounds having specific substituents and structures are supported on a support as described above, and it can significantly improve the melt strength through the introduction of long chain branches (LCB) into polypropylene molecules. Polypropylene having these properties can be produced into various grades of products in a wide range of application fields depending on hydrogen reactivity.

### [ADVANTAGEOUS EFFECTS]

The hybrid supported metallocene catalyst according to the present disclosure exhibits excellent catalytic activity in propylene polymerization and has an excellent effect of preparing polypropylene having high melt tension through the introduction of long chain branches (LCB) into polypropylene molecules.

### [DETAILED DESCRIPTION OF THE EMBODIMENTS]

### <EXAMPLES>

### <Preparation of Metallocene Compound>

### Synthesis Example 1

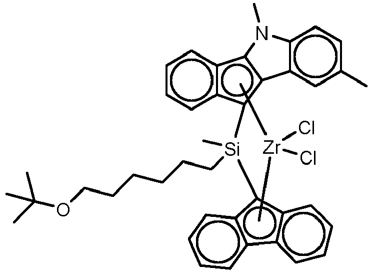

### 1-1. Preparation of a ligand compound

2 g of fluorene was dissolved in 5 mL of methyl tert-butyl ether (MTBE) and 100 mL hexane, then 5.5 mL of n-butyllithium (n-BuLi), 2.5 M solution in hexane was added dropwise in a dry ice/acetone bath, and the solution was stirred at room temperature overnight. 3.6 g of (6-(tert-butoxy)hexyl)dichloro(methyl)silane was dissolved in 50 mL of hexane, the fluorene-Li slurry was transferred thereto for 30 minutes under a dry ice/acetone bath, and the solution was stirred at room temperature overnight. At the same time, 5,8-dimethyl-5,10-dihydroindeno[1,2-b]indole (12 mmol, 2.8 g) was also dissolved in 60 mL of tetrahydrofuran (THF), 5.5 mL of n-BuLi, 2.5 M solution in hexane was added dropwise in a dry ice/acetone bath, and the solution was stirred at room temperature overnight. The reaction solution of fluorene and (6-(tert-butoxy)hexyl)dichloro(methyl)silane was NMR-sampled to confirm the completion of the reaction, and then, the 5,8-dimethyl-5,10-dihydroindeno[1,2-b]indole-Li solution was transferred thereto under a dry ice/acetone bath. The solution was stirred at room temperature overnight. After the reaction, the solution was extracted with ether/water, and the remaining moisture of the organic layer was removed with MgSO₄ to obtain a ligand compound (Mw 597.90, 12 mmol), and it was confirmed through ₁H-NMR that two isomers were produced.

¹H NMR (500 MHz, d⁶-benzene): -0.30 - -0.18 (3H, d), 0.40 (2H, m), 0.65 - 1.45 (8H, m), 1.12 (9H, d), 2.36 - 2.40 (3H, d), 3.17 (2H, m), 3.41 - 3.43 (3H, d), 4.17 - 4.21 (1H, d), 4.34 - 4.38 (1H, d), 6.90 - 7.80 (15H, m).

### 1-2. Preparation of a metallocene compound

7.2 g (12 mmol) of the ligand compound synthesized in 1-1 was dissolved in 50 mL of diethylether, 11.5 mL of n-BuLi, 2.5 M solution in hexane was added dropwise in a dry ice/acetone bath, and the solution was stirred at room temperature overnight. It was vacuum dried to obtain brown sticky oil reaction product, which was then dissolved in toluene to obtain a slurry. ZrCl₄(THF)₂ was prepared and 50 mL of toluene was added to prepare a slurry. The 50 mL toluene slurry of ZrCl₄(THF)₂ was transferred in a dry ice/acetone bath. By stirring at room temperature overnight, it turned to violet. The reaction solution was filtered to remove LiCl. The filtrate was vacuum dried to remove toluene, and then, hexane was introduced and sonication was conducted for 1 hour. The slurry was filtered to obtain 6 g of filtered solid of a dark violet metallocene compound (Mw 758.02, 7.92 mmol, yield 66mol%). Two isomers were observed on ¹H-NMR.

¹H NMR (500 MHz, CDCl₃): 1.19 (9H, d), 1.71 (3H, d), 1.50 - 1.70(4H, m), 1.79(2H, m), 1.98 - 2.19(4H, m), 2.58(3H, s), 3.38 (2H, m), 3.91 (3H, d), 6.66 - 7.88 (15H, m).

### Synthesis Example 2

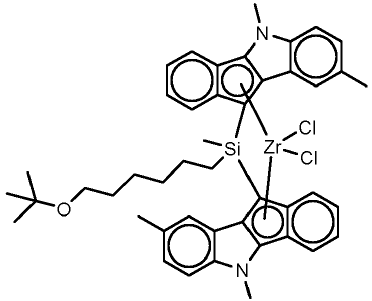

### 2-1. Preparation of a ligand compound

Into a 250 mL flask, 2.63 g (12 mmol) of 5-methyl-5,10-dihydroindeno[1,2-b]indole was introduced, and dissolved in 50 mL of THF, and then, 6 mL of n-BuLi, 2.5M solution in hexane was added dropwise in a dry ice/acetone bath, and the solution was stirred at room temperature overnight. Into another 250 mL flask, 1.62 g(6 mmol) of (6-(tert-butoxy)hexyl)dichloro(methyl)silane was dissolved in 100 mL of hexane, and then, slowly added dropwise to the lithiated solution of 5-methyl-5,10-dihydroindeno[1,2-b]indole under a dry ice/acetone bath, and the solution was stirred at room temperature overnight. After the reaction, the solution was extracted with diethylether/water, and the remaining moisture of the organic layer was removed with MgSO₄, and then vacuum dried to obtain 3.82 g (6 mmol) of a ligand compound, and it was confirmed through ¹H-NMR.

¹H NMR (500 MHz, CDCl₃): -0.33 (3H, m), 0.86 - 1.53 (10H, m), 1.16 (9H, d), 3.18 (2H, m), 4.07 (3H, d), 4.12 (3H, d), 4.17 (1H, d), 4.25 (1H, d), 6.95 - 7.92 (16H, m).

### 2-2. Preparation of a metallocene compound

3.82 g (6 mmol) of the ligand compound synthesized in 2-1 was dissolved in 100 mL of toluene and 5 mL of MTBE, and then, 5.6 mL(14 mmol) of n-BuLi, 2.5M solution in hexane was added dropwise in a dry ice/acetone bath, and the solution was stirred at room temperature overnight. Into another flask, 2.26 g (6 mmol) of ZrC_{I4}(THF)₂ was prepared, and 100 ml of toluene was introduced to prepare a slurry. The toluene slurry of ZrC_{I4}(THF)₂ was transferred to the lithigated ligand in a dry ice/acetone bath. The solution was stirred at room temperature overnight, and then, it turned to a violet color. The reaction solution was filtered to remove LiCl, and then, the obtained filtrate was vacuum dried, hexane was added, and sonication was conducted. The slurry was filtered to obtain 3.40 g of the filtered solid of a dark violet metallocene compound (yield 71.1mol%).

¹H NMR (500 MHz, CDCl₃): 1.74 (3H, d), 0.85 - 2.33(10H, m), 1.29(9H, d), 3.87 (3H, s), 3.92 (3H, s), 3.36(2H, m), 6.48 - 8.10 (16H, m).

### Synthesis Example 3

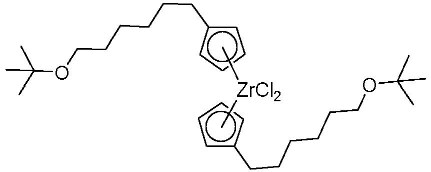

### 3-1. Preparation of a ligand compound

tert-Butyl-O-(CH₂)₆-Cl was prepared using 6-chlorohexanol according to the method described in the literature (Tetrahedron Lett., 2951, 1988), and cyclopentadienyl sodium (NaC₅H₅) was reacted therewith to obtain a ligand compound, tert-Butyl-O-(CH₂)₆-C₅H₅ (yield 60%, bp 80°C /0.1 mmHg).

### 3-2. Preparation of a metallocene compound

Additionally, the ligand compound prepared in 3-1, t-Butyl-O-(CH₂)₆-C₅H₅, was dissolved in THF at -78°C, n-butyllithium (n-BuLi) was slowly added thereto, and then the temperature was raised to room temperature, and the mixture was reacted for 8 hours. The lithium salt solution was again slowly added to a suspension solution of ZrCl₄(THF)₂ (1.70 g, 4.50 mmol)/THF(30 mL) at -78°C, and further reacted at room temperature for 6 hours.

After completion of the reaction, all volatile substances were vacuum dried, and a hexane solvent was added to the obtained oily liquid substances and filtered. After the filtered solution was vacuum dried, hexane was added thereto, and a precipitate was induced at a low temperature (-20°C). The obtained precipitate was filtered at low temperature to obtain [tert-Butyl-O-(CH₂)₆-C₅H₄]₂ZrCl₂ compound as a white solid (yield 92%).

### <Preparation of a second metallocene compound>

### Synthesis Example 4

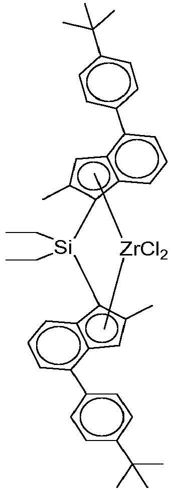

### 4-1. Preparation of a ligand compound

2-Methyl-4-tert-butyl-phenylindene (20.0 g) was dissolved in toluene/THF=10/1 solution (volume ratio, 220 mL), and then n-butyllithium solution (2.5 M, hexane solvent, 22.2 g) was slowly added dropwise at 0°C, and then stirred at room temperature for one day. Then, diethyldichlorosilane (6.2 g) was slowly added dropwise to the mixed solution at -78degrees Celsius (°C), stirred for about 10 minutes, and then stirred at room temperature for one day. Then, water was added to separate the organic layer, and then the solvent was distilled under reduced pressure to obtain a ligand compound, bis(2-methyl-4-(4'-tert-butyl-phenyl)indenyl)diethylsilane.

### 4-2. Preparation of a metallocene compound

The ligand compound prepared in 4-1 was dissolved in toluene/THF=5/1 solution (120 mL), and then n-butyllithium solution (2.5 M, hexane solvent, 22.2 g) was slowly added dropwise at -78°C. Then, the solution was stirred at room temperature for one day. To the reaction solution, zirconium chloride (8.9 g) was diluted in toluene (20 mL), and then slowly added dropwise at -78°C, and stirred at room temperature for one day. The solvent of the reaction solution was removed under reduced pressure, dichloromethane was added, filtered, and the filtrate was removed by vacuum distillation. The result was recrystallized using toluene and hexane to obtain high purity rac-[(diethylsilane-diyl)-bis((2-methyl-4-(4'-tert-butyl-phenyl)indenyl)]zirconium dichloride (10.1 g, 34%, rac:meso=20:1).

### Synthesis Example 5

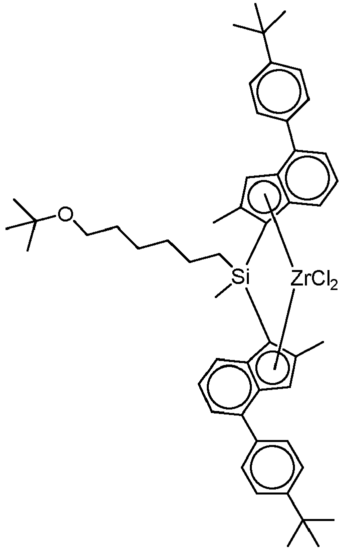

### 5-1. Preparation of a ligand compound

2-Methyl-4-(t-butyl)phenylindene (1 eq) was dissolved in toluene/THF=10/1 solution (volume ratio, 0.5 M), and then n-BuLi (2.1 eq) was slowly added dropwise at - 25°C, and the solution was stirred at room temperature for 3 hours. Then, CuCN (2 mol%) was added and stirred for 30 minutes, and then dichloro (6-(tert-butoxy)hexylmethyl silane (0.53 eq) was added at -10°C, and then stirred at room temperature overnight. Then, the reaction was worked-up using water, and dried to obtain a ligand compound, bis(2-methyl-4-tert-butyl-phenylindenyl)6-(tert-butoxy)hexylmethylsilane.

### 5-2. Preparation of a metallocene compound

The ligand compound prepared in 5-1 was dissolved in toluene/diethyl ether = 2/1 solution (volume ratio, 0.53 M), n-BuLi (2.05 eq) was added at -25°C, and then the solution was stirred at room temperature for 5 hours. Into a flask, ZrCl₄ (1 eq) was prepared and toluene (0.17 M) was introduced to prepare a slurry, which was then stirred at room temperature overnight.

When the reaction was completed, the solvent was vacuum dried, dichloromethane (DCM) was introduced again, and LiCl was removed through a filter. The filtrate was vacuum dried, recrystallized using hexane/DCM, and then the resulting solid was filtered and vacuum dried to obtain a solid metallocene compound, (6-(tert-butoxy)hexylmethyl-silanediylbis(4-(4'-(tert-butyl)phenyl)-2-methyl-1H-inden-1-yl)zirconium dichloride.

### Synthesis Example 6

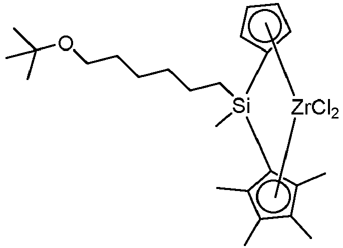

### 6-1. Preparation of a ligand compound

1 Equivalent of tetramethylcyclopentadiene (TMCP) was dissolved in tetrahydrofuran at -78°C, n-BuLi (1 eq) was slowly added dropwise, and then heated to room temperature, and allowed to react for 8 hours. Then, the reaction solution was added dropwise to a flask containing 1 equivalent of (6-tert-butoxyhexyl)dichloromethylsilane at -78°C, and the solution was stirred at room temperature overnight. At the same time, into another flask, 1 equivalent of cyclopentadiene(CP) was dissolved in tetrahydrofuran at -78°C, n-BuLi (1 eq) was slowly added dropwise, and then heated to room temperature and stirred overnight. The TMCP reaction mixture was added dropwise into a flask containing the CP reaction mixture at -78°C, heated to room temperature, and stirred overnight to obtain a ligand.

### 6-2. Preparation of a metallocene compound

2 Equivalents of n-BuLi were slowly added dropwise to the ligand mixture prepared in 6-1 at -78°C, and then the temperature was raised to room temperature, and then the solution was stirred for 8 hours or more, slowly added dropwise into a flask containing ZrCl₄(THF)₂ and stirred overnight. All solvents were vacuum dried, and a hexane solvent was added to the obtained oily liquid substance and then recrystallized to obtain a solid.

### <Preparation of supported catalyst>

### Preparation Example 1: Preparation of a hybrid supported metallocene catalyst

100 mL of a toluene solution was added to a SUS autoclave, and the reactor temperature was maintained at 40°C. 10 g of silica (SP2408HT) was dehydrated by applying vacuum for 12 hours at a temperature of 600°C, and then added to a 500 L reactor and then 12 mmol of methylaluminoxane (MAO) was added and reacted at 95°C for 12 hours. Then, 30 µmol of the first metallocene compound prepared in Synthesis Example 1 was dissolved in toluene, and then added thereto. The solution was stirred at 50°C at 200 rpm and allowed to react for 2 hours.

After completion of the reaction, 60 µmol of the second metallocene compound prepared in Synthesis Example 4 was dissolved in toluene, and then stirred at 50°C at 200 rpm and allowed to react for 2 hours.

After completion of the reaction, the stirring was stopped and the mixture was washed with a sufficient amount of toluene, then 50 mL of toluene was added again and stirred for 10 minutes, then the stirring was stopped and the mixture was washed with a sufficient amount of toluene to remove compounds not participated in the reaction. Then, 50 mL of hexane was added and stirred, and a hexane slurry was transferred to a filter and filtered.

A primary drying was performed at room temperature for 5 hours under reduced pressure, and a secondary drying was performed at 40°C for 4 hours under reduced pressure to obtain a hybrid supported catalyst.

### Preparation Example 2: Preparation of a hybrid supported metallocene catalyst

A hybrid supported metallocene catalyst was prepared using the same method as in Preparation Example 1, except that 15 µmol of the metallocene compound prepared in Synthesis Example 1 was added, and 75 µmol of the metallocene compound prepared in Synthesis Example 4 was added.

### Preparation Example 3: Preparation of a hybrid supported metallocene catalyst

A hybrid supported metallocene catalyst was prepared using the same method as in Preparation Example 1, except that the metallocene compound prepared in Synthesis Example 2 was used instead of the first metallocene compound prepared in Synthesis Example 1.

### Preparation Example 4: Preparation of a hybrid supported metallocene catalyst

A hybrid supported metallocene catalyst was prepared using the same method as in Preparation Example 2, except that the metallocene compound prepared in Synthesis Example 2 was used instead of the first metallocene compound prepared in Synthesis Example 1.

### Comparative Preparation Example 1: Preparation of a solely supported metallocene catalyst

100 mL of a toluene solution was added to a SUS autoclave, and the reactor temperature was maintained at 40°C. 10 g of silica (SP2408HT) was dehydrated by applying vacuum for 12 hours at a temperature of 600°C, and then added to a 500 L reactor and then 12 mmol of methylaluminoxane (MAO) was added and reacted at 95°C for 12 hours. Then, 90 µmol of the second metallocene compound prepared in Synthesis Example 4 was dissolved in toluene, and then added thereto. The solution was stirred at 50°C at 200 rpm and allowed to react for 2 hours.

After completion of the reaction, the stirring was stopped and the mixture was washed with a sufficient amount of toluene, then 50 mL of toluene was added again and stirred for 10 minutes, then the stirring was stopped and the mixture was washed with a sufficient amount of toluene to remove compounds not participated in the reaction. Then, 50 mL of hexane was added and stirred, and then a hexane slurry was transferred to a filter and filtered.

A primary drying was performed at room temperature for 5 hours under reduced pressure, and a secondary drying was performed at 40°C for 4 hours under reduced pressure to obtain a solely supported catalyst.

### Comparative Preparation Example 2: Preparation of a solely supported metallocene catalyst

A solely supported metallocene catalyst was prepared using the same method as in Comparative Preparation Example 1, except that the first metallocene compound prepared in Synthesis Example 1 was used instead of the second metallocene compound prepared in Synthesis Example 4.

### Comparative Preparation Example 3: Preparation of a solely supported metallocene catalyst

A solely supported metallocene catalyst was prepared using the same method as in Comparative Preparation Example 1, except that the first metallocene compound prepared in Synthesis Example 2 was used instead of the second metallocene compound prepared in Synthesis Example 4.

### Comparative Preparation Example 4: Preparation of a hybrid supported metallocene catalyst

A hybrid supported metallocene catalyst was prepared using the same method as in Preparation Example 1, except that the first metallocene compound prepared in Synthesis Example 3 was used instead of the first metallocene compound prepared in Synthesis Example 1.

### Comparative Preparation Example 5: Preparation of a hybrid supported metallocene catalyst

A hybrid supported metallocene catalyst was prepared using the same method as in Preparation Example 2, except that the first metallocene compound prepared in Synthesis Example 3 was used instead of the first metallocene compound prepared in Synthesis Example 1.

### Comparative Preparation Example 6: Preparation of a hybrid supported metallocene catalyst

A hybrid supported metallocene catalyst was prepared using the same method as in Preparation Example 1, except that the second metallocene compound prepared in Synthesis Example 5 was used instead of the second metallocene compound prepared in Synthesis Example 2.

### Comparative Preparation Example 7: Preparation of a hybrid supported metallocene catalyst

A hybrid supported metallocene catalyst was prepared using the same method as in Preparation Example 2, except that the second metallocene compound prepared in Synthesis Example 5 was used instead of the second metallocene compound prepared in Synthesis Example 2.

### Comparative Preparation Example 8: Preparation of a hybrid supported metallocene catalyst

A hybrid supported metallocene catalyst was prepared using the same method as in Preparation Example 1, except that the second metallocene compound prepared in Synthesis Example 6 was used instead of the second metallocene compound prepared in Synthesis Example 2.

### Comparative Preparation Example 9: Preparation of a hybrid supported metallocene catalyst

A hybrid supported metallocene catalyst was prepared using the same method as in Preparation Example 2, except that the second metallocene compound prepared in Synthesis Example 6 was used instead of the second metallocene compound prepared in Synthesis Example 2.

### <Polypropylene polymerization>

### Example 1

A 2 L stainless reactor was vacuum dried at 65°C, and then cooled, to which 3 mL of triethylaluminum was added at room temperature, 820 ppm of hydrogen gas was added, and then 1.5 L of propylene was added. At this time, the addition amount of hydrogen gas is a numerical value based on the propylene monomer content.

After stirring for 10 minutes, 30 mg of the hybrid supported metallocene catalyst of Preparation Example 1 and 20 mL of a hexane slurry were prepared at 20°C, and then added to a reactor under argon (Ar) conditions. The reactor temperature was slowly raised up to 70°C, and then the homopolymerization process of propylene was performed under a pressure condition of 30 bar for 1 hour, and unreacted propylene was vented.

### Examples 2 to 4

Homopolypropylene was prepared using the same method as in Example 1, except that the hybrid supported metallocene catalysts prepared in Preparation Examples 2 to 4 were respectively used instead of the hybrid supported metallocene catalyst prepared in Preparation Example 1.

### Comparative Examples 1 to 9

Homopolypropylene was prepared using the same method as in Example 1, except that the solely supported catalysts prepared in Comparative Preparation Examples 1 to 3 or the hybrid supported catalysts prepared in Comparative Preparation Examples 4 to 9 were respectively used instead of the hybrid supported metallocene catalyst prepared in Preparation Example 1.

### <Test Example: Evaluation of Physical Properties of Polypropylene>

Together with the activities of the metallocene catalysts used respectively in the polymerization process according to the Examples and Comparative Examples, the physical properties of the homopolypropylene prepared using the supported catalyst were evaluated by the following methods. The results are shown in Table 1 below.

### (1) Activity (kg PP/g·cat·hr)

The activity was calculated by the ratio of the weight (kg PP) of the homopolypropylene produced per mass (g) of the supported catalyst used relative to the unit time (h).

### (2) Melt index (MI_{2.16})

It was measured at 230°C under a load of 2.16 kg according to the American Society for Testing and Materials standard ASTM D 1238, and expressed as the weight (g) of the polymer melted out for 10 minutes.

### (3) Melting point (Tm)

The melting point (Tm) of the polypropylene was measured using Differential Scanning Calorimeter (DSC, device name: DSC 2920, manufacturer: TA instrument). Specifically, the temperature was increased and the polymer was heated up to 220°C, and then maintained at the same temperature for 5 minutes. After cooling down up to 20°C, the temperature was again increased, and the temperature corresponding to the peak of the DSC (Differential Scanning Calorimeter, manufactured by TA) curve was assumed to be the melting point. At this time, the increasing speed and the lowering speed of the temperature were 10°C/min, and the result measured in the section where the second temperature increased was used as the melting point.

### (4) Weight average molecular weight (Mw, g / mol) and molecular weight distribution (MWD, polydispersity index)

The molecular weight distribution (Mw/Mn) was calculated by measuring the weight average molecular weight (Mw) and the number average molecular weight (Mn) of the polymer using a gel permeation chromatography (GPC, manufactured by Waters) and then dividing the weight average molecular weight by the number average molecular weight.

Specifically, Waters PL-GPC220 instrument was used as the gel permeation chromatography (GPC) instrument, and a Polymer Laboratories PLgel MIX-B 300 mm length column was used. At this time, the measurement temperature was 160°C, 1,2,4-trichlorobenzene was used as a solvent, and the flow rate was 1 mL/min. Each polypropylene sample was pretreated by dissolving it in 1,2,4-trichlorobenzene containing 0.0125% BHT at 160°C for 10 hours using a GPC analyzer (PL-GP220), prepared to a concentration of 10 mg/10 mL, and then supplied in an amount of 200 µL. The values of Mw and Mn were derived using a calibration curve formed using a polystyrene standard specimen. 9 kinds of the polystyrene standard specimens were used with the weight average molecular weight of 2000 g/mol, 10000 g/mol, 30000 g/mol, 70000 g/mol, 200000 g/mol, 700000 g/mol, 2000000 g/mol, 4000000 g/mol, 10000000 g/mol.

### (5) Pentad sequence distribution

The pentad sequence distribution of a polypropylene polymer was measured using quantitative nuclear magnetic resonance (NMR) spectroscopy as in the paper, V. Busico and R. Cipullo, Progress in Polymer Science, 2001, 26, 443-533.

Specifically, the pentad sequence distributions of the homopolypropylene of Examples and Comparative Examples were measured at the pentad level by ¹³C-NMR analysis and were expressed as the percentage of isotactic pentad (mmmm) sequences with respect to all pentad sequences. The mmmm% is a value based on moles.

Bruker's 500 MHz NMR was used as a measuring device, polypropylene was dissolved in 1.1.2.2-tetrachloroethane (TCE-d2) solvent and the measurement was performed at an absolute temperature of 393K (¹³C; pulse sequence=zgig30, ns=4096, d₁=10 sec, ¹H; pulse sequence=zg30, ns =128, d₁=3 sec). The sequence distribution was analyzed with reference to the analysis method AMT-3989-0k, and the pentad sequence distribution (mmmm%) was calculated based on the paper, V. Busico and R. Cipullo, Progress in Polymer Science, 2001, 26, 443-533.

### (6) Melt strength (MS)

A polypropylene polymer sample was connected to Rheotens of a capillary rheometer (Rheo-tester 2000 from Gottfert), and the measurement was performed five times under the following conditions, and then the average value was taken.
- Sample specifications: Propylene polymer pellet resin was placed in a capillary die at a temperature of 200°C, melted for 5 minutes, and then the resin that came out constantly at an extrusion rate of 22 g/min was measured through the Rheotens. The maximum tensile stress until the resulting resin filament breaks was expressed as melt strength.
- the capillary die standard is 4 mm in diameter, 25 mm in length, Lo/Do = 6.25
- the distance from the capillary die to the Rheotens wheel: 80 mm
- the wheel acceleration: 1.2 cm/sec².

**[Table 1]**

| | Catalyst | Molar ratio of hybrid suppor ted catalys t precur sors * | Activity (kg PP/g Cat.hr) | MI_{2.16} (g/10m in) | Tm (°C) | MWD | Pentad sequen ce distribu tion (mmm m, %) | MS (cN) |
|---|---|---|---|---|---|---|---|---|
| Example 1 | Preparation Example 1 | 1:2 | 11.4 | 1.8 | 154 | 2.9 | 82.9 | 49 |
| Example 2 | Preparation Example 2 | 1:5 | 12.3 | 1.3 | 155 | 2.9 | 89.1 | 40 |
| Example 3 | Preparation Example 3 | 1:2 | 7.6 | 10.4 | 153 | 3.1 | 72.8 | 25 |
| Example 4 | Preparation Example 4 | 1:5 | 9.1 | 8.7 | 153 | 3.2 | 77.6 | 23 |
| Compara tive Example 1 | Comparativ e Preparation Example 1 | Solely suppor ted | 13.0 | 3.4 | 155 | 2.4 | 98 | 8 |
| Compara tive Example 2** | Comparativ e Preparation Example 2 | Solely suppor ted | 2.2 | Unmea surable | Unmea surable | 2.6 | 8.1 | Unmea surable |
| Compara tive Example 3** | Comparativ e Preparation Example 3 | Solely suppor ted | 1.0 | Unmea surable | Unmea surable | 3.3 | 4.7 | Unmea surable |
| Compara tive Example 4 | Comparativ e Preparation Example 4 | 1:2 | 5.8 | 6.8 | 155 | 4.5 | 70.1 | 2 |
| Compara tive Example 5 | Comparativ e Preparation Example 5 | 1:5 | 7.1 | 5.3 | 155 | 3.8 | 82.5 | 5 |
| Compara tive Example 6 | Comparativ e Preparation Example 6 | 1:2 | 13.5 | 50.8 | 150 | 3.4 | 88.1 | 10 |
| Compara | Comparativ | 1:5 | 14.8 | 44.2 | 151 | 3.4 | 90.3 | 11 |
| tive Example 7 | e Preparation Example 7 | | | | | | | |
| Compara tive Example 8** | Comparativ e Preparation Example 8 | 1:2 | 13.5 | Unmea surable | Unmea surable | 5.1 | 5.1 | Unmea surable |
| Compara tive Example 9** | Comparativ e Preparation Example 9 | 1:5 | 14.8 | Unmea surable | Unmea surable | 5.3 | 5.4 | Unmea surable |
| * The molar ratio of the catalyst precursors is expressed as a molar ratio of the first metallocene compound: the second metallocene compound. | | | | | | | | |
| **Comparative Examples 2, 3, 8, and 9 showed that the polymer was in a highly sticky form, making it impossible to evaluate the physical properties (atatic polypropylene) | | | | | | | | |

Referring to Table 1, it can be confirmed that Examples 1 to 4 using the hybrid supported metallocene catalysts of Preparation Examples 1 to 4 according to an embodiment of the present disclosure exhibit high activity in propylene polymerization, and can prepare homopolypropylene with improved melt tension through the introduction of long chain branches (LCB) into polypropylene molecules together with a narrow molecular weight distribution.

## Claims

1. A hybrid supported metallocene catalyst comprising at least one first metallocene compound selected from compounds represented by the following Chemical Formula 1; at least one second metallocene compound selected from compounds represented by the following Chemical Formula 3; and a support for supporting the first and second metallocene compounds: 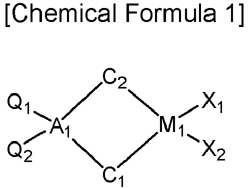 in Chemical Formula 1,
M₁ is zirconium or hafnium;
A₁ is carbon, silicon, or germanium;
Q₁ and Q₂ are the same as or different from each other, and are each independently hydrogen, halogen, C₁₋₂₀ alkyl, C₂₋₂₀ alkenyl, C₂₋₂₀ alkoxyalkyl, C₇₋₄₀ aryloxyalkyl, C₆₋₄₀ aryl, C₇₋₄₀ alkylaryl, or C₇₋₄₀ arylalkyl;
X₁ and X₂ are the same as or different from each other, and are each independently halogen, C₁₋₂₀ alkyl, C₂₋₂₀ alkenyl, C₆₋₄₀ aryl, a nitro group, an amido group, C₁₋₂₀ alkylsilyl, C₁₋₂₀ alkoxy, or C₁₋₂₀ sulfonate group;
C₁ and C₂ are the same as or different from each other, and are each independently represented by either the following Chemical Formula 2a or the following Chemical Formula 2b, provided that the case where both C₁ and C₂ are Chemical Formula 2b is excluded; 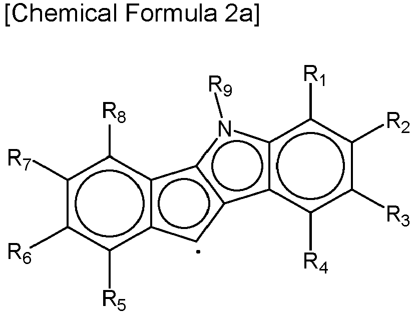 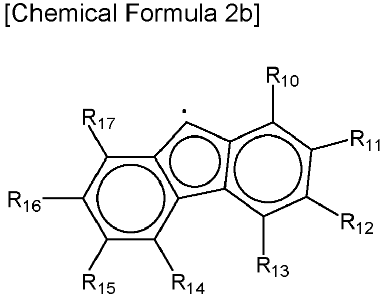
in Chemical Formulae 2a and 2b,
R₁ to R₁₇ are the same as or different from each other, and are each independently hydrogen, halogen, C₁₋₂₀ alkyl, C₁₋₂₀ haloalkyl, C₂₋₂₀ alkenyl, C₁₋₂₀ alkylsilyl, C₁₋₂₀ silylalkyl, C₁₋₂₀ alkoxysilyl, C₁₋₂₀ alkoxy, C₆₋₄₀ aryl, C₇₋₄₀ alkylaryl, or C₇₋₄₀ arylalkyl; or two or more neighboring groups of the R₁₀ to R₁₇ are connected to each other to form a substituted or unsubstituted aliphatic or aromatic ring;
• represents the site for binding to A₁ and M₁; 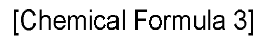 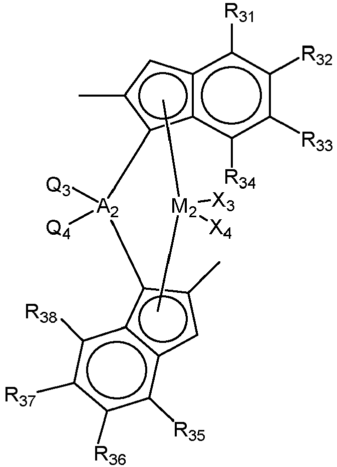
in Chemical Formula 3,
M₂ is zirconium or hafnium;
A₂ is carbon, silicon, or germanium;
X₃ and X₄ are the same as or different from each other and are each independently halogen,
R₃₁ and R₃₅ are each phenyl substituted with C₃₋₆ branched alkyl;
R₃₂ to R₃₄ and R₃₆ to R₃₈ are the same as or different from each other, and are each independently hydrogen, halogen, C₁₋₂₀ alkyl, C₂₋₂₀ alkenyl, C₁₋₂₀ alkylsilyl, C₁₋₂₀ silylalkyl, C₁₋₂₀ alkoxysilyl, C₁₋₂₀ ether, C₁₋₂₀ silyl ether, C₁₋₂₀ alkoxy, C₆₋₄₀ aryl, C₇₋₂₀ alkylaryl, or C₇₋₂₀ arylalkyl, and
Q₃ and Q₄ are the same as each other and are each C₂₋₂₀ alkyl.

2. The hybrid supported metallocene catalyst of Claim 1, wherein
the Q₁ and Q₂ are each C₁₋₃ alkyl, or C₂₋₁₂ alkoxyalkyl,
the X₁ and X₂ are each halogen, and
the A₁ is silicon.

3. The hybrid supported metallocene catalyst of Claim 1, wherein the R₁ to R₉ are each hydrogen, halogen, C₁₋₁₂ linear or branched alkyl, C₁₋₁₂ linear or branched alkoxy, or C₆₋₂₀ aryl.

4. The hybrid supported metallocene catalyst of Claim 1, wherein the R₁₀ to R₁₇ are each hydrogen, or C₁₋₁₂ linear or branched alkyl; or two or more neighboring groups of the R₁₀ to R₁₇ are connected to each other to form C₆₋₂₀ aliphatic or aromatic ring, which is substituted with at least one C₁₋₃ alkyl.

5. The hybrid supported metallocene catalyst of Claim 1, wherein the first metallocene compound is any one of compounds represented by the following structural formulas.

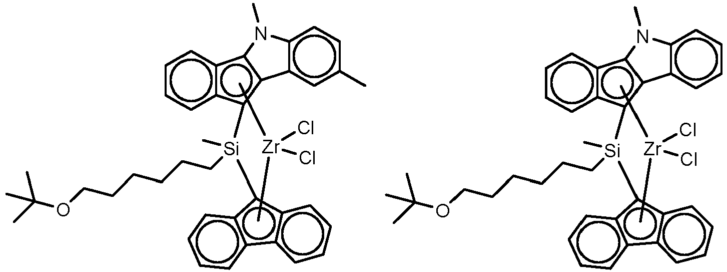

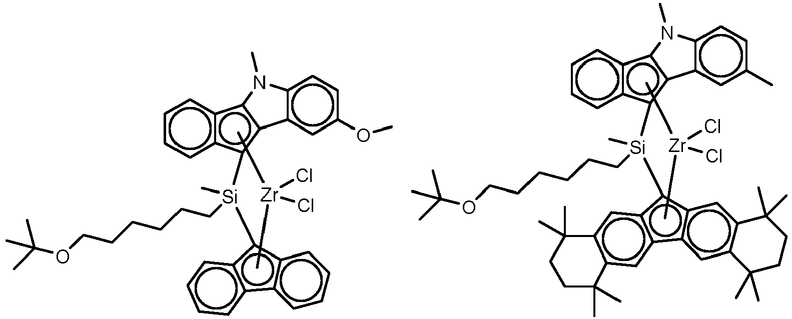

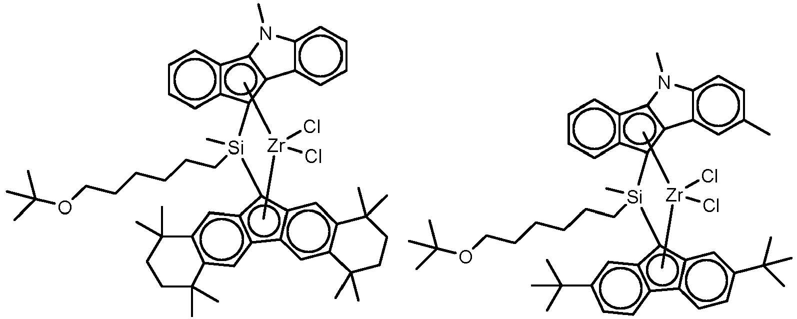

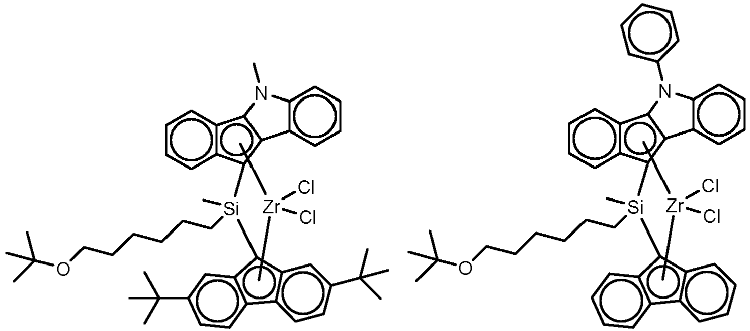

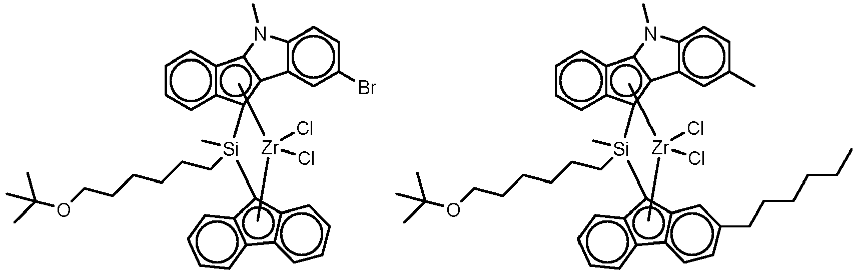

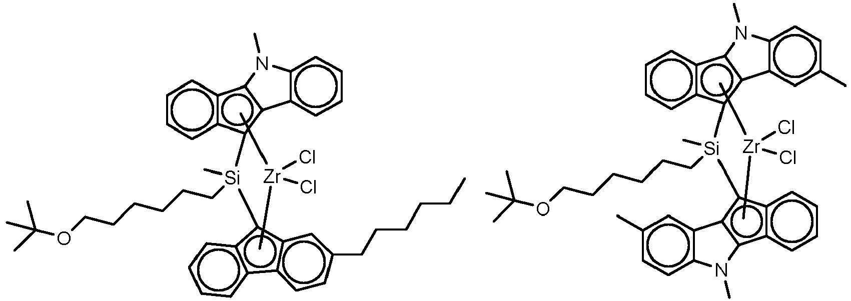

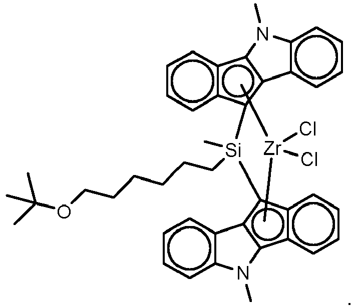

6. The hybrid supported metallocene catalyst of Claim 1, wherein the X₃ and X₄ are each halogen, and the A₂ is silicon.

7. The hybrid supported metallocene catalyst of Claim 1, wherein the Q₃ and Q₄ are the same as each other, and are each C₂₋₄ linear alkyl.

8. The hybrid supported metallocene catalyst of Claim 1, wherein the second metallocene compound is a compound represented by the following structural formula.

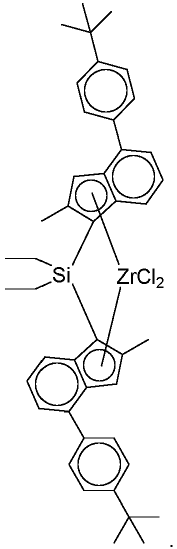

9. The hybrid supported metallocene catalyst of Claim 1, wherein the first metallocene compound and the second metallocene compound are supported in a molar ratio of 1:1 to 1:8.

10. A method for preparing polypropylene, comprising a step of polymerizing a propylene monomer in the presence of the hybrid supported metallocene catalyst of Claim 1.

11. The method of Claim 10, wherein the polypropylene is a homopolymer.

12. The method of Claim 10, wherein the polypropylene has a pentad sequence distribution measured by ¹³C-NMR analysis of 65 mmmm% or more, wherein the pentad sequence distribution is determined by dissolving the polypropylene in 1.1.2.2-tetrachloroethane (TCE-d2) solvent and performing the measurement using a Bruker 500 MHz NMR at a temperature of 393K at a pulse sequence=zgig30, ns=4096, d1=10 sec, 1H; pulse sequence=zg30, ns =128, d1=3 sec, analyzing the sequence distribution with reference to the analysis method AMT-3989-0k, and calculating the pentad sequence distribution based on the paper, V. Busico and R. Cipullo, Progress in Polymer Science, 2001, 26, 443-533.

13. The method of Claim 10, wherein the polypropylene has a melt strength (MS) of 15 cN or more, wherein, the melt strength is measured using a capillary rheometer; manufactured by Gottfert, device name: Rheo-tester 2000 by connecting a polypropylene sample to Rheotens for a capillary rheometer, placing a polypropylene pellet resin in a capillary die at a temperature of 200°C, and melting for 5 minutes, then measuring he resin that comes out constantly at an extrusion rate of 22 g/min through the Rheotens, whereby the maximum tensile stress until the resulting resin filament breaks is expressed as melt strength; at this time, the capillary die standard is 4 mm in diameter, 25 mm in length and Lo/Do = 6.25, the distance from the capillary die to the Rheotens wheel is 80 mm, and the wheel acceleration is applied at 1.2 cm/sec².

## Patentansprüche

1. Geträgerter Hybrid-Metallocenkatalysator, umfassend mindestens eine erste Metallocenverbindung, die ausgewählt ist aus durch die folgende chemische Formel 1 dargestellten Verbindungen; mindestens eine zweite Metallocenverbindung, die ausgewählt ist aus durch die folgende chemische Formel 3 dargestellten Verbindungen; und einen Träger zum Trägern der ersten und zweiten Metallocenverbindungen: 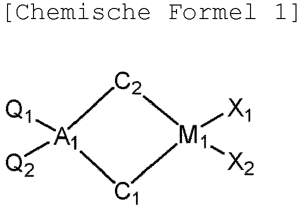 worin in der chemischen Formel 1
M₁ Zirkonium oder Hafnium ist;
A₁ Kohlenstoff, Silizium oder Germanium ist;
Q₁ und Q₂ gleich oder voneinander verschieden sind und jeweils unabhängig Wasserstoff, Halogen, C₁₋₂₀-Alkyl, C₂₋₂₀-Alkenyl, C₂₋₂₀-Alkoxyalkyl, C₇₋₄₀-Aryloxyalkyl, C₆₋₄₀-Aryl, C₇₋₄₀-Alkylaryl oder C₇₋₄₀-Arylalkyl sind;
X₁ und X₂ gleich oder voneinander verschieden sind und jeweils unabhängig Halogen, C₁₋₂₀-Alkyl, C₂₋₂₀-Alkenyl, C₆₋₄₀-Aryl, eine Nitrogruppe, eine Amidogruppe, C₁₋₂₀-Alkylsilyl, C₁₋₂₀-Alkoxy oder C₁₋₂₀-Sulfonatgruppe sind;
C₁ und C₂ gleich oder voneinander verschieden sind und jeweils unabhängig durch entweder die folgende chemische Formel 2a oder die folgende chemische Formel 2b dargestellt werden, wobei der Fall ausgenommen ist, dass beide von C₁ und C₂ die chemische Formel 2b sind: 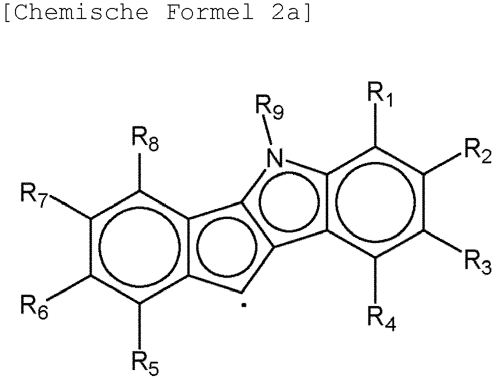 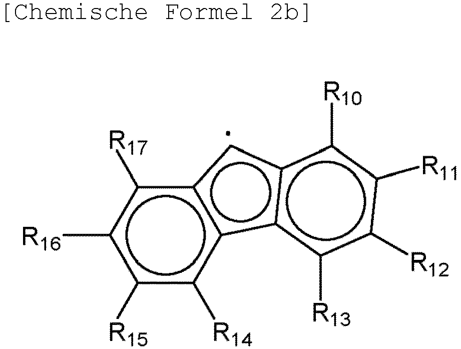
wobei in den chemischen Formeln 2a und 2b
R₁ bis R₁₇ gleich oder voneinander verschieden sind und jeweils unabhängig Wasserstoff, Halogen, C₁₋₂₀-Alkyl, C₁₋₂₀-Haloalkyl, C₂₋₂₀-Alkenyl, C₁₋₂₀-Alkylsilyl, C₁₋₂₀-Silylalkyl, C₁₋₂₀-Alkoxysilyl, C₁₋₂₀-Alkoxy, C₆₋₄₀-Aryl, C₇₋₄₀-Alkylaryl oder C₇₋₄₀-Arylalkyl sind; oder zwei oder mehr benachbarte Gruppen von R₁₀ bis R₁₇ miteinander verbunden sind, um einen substituierten oder unsubstituierten aliphatischen oder aromatischen Ring zu bilden;
* die Bindungsstelle an A₁ und M₁ darstellt; 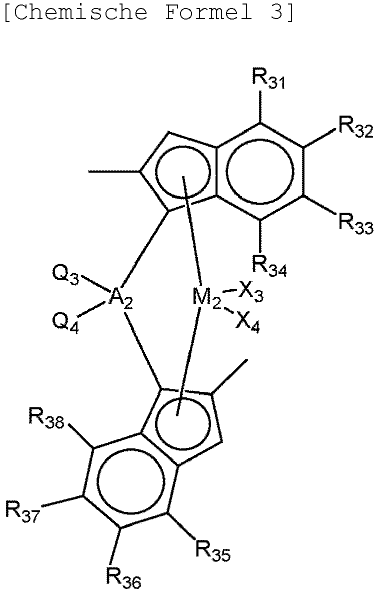
wobei in der chemischen Formel 3
M₂ Zirkonium oder Hafnium ist;
A₂ Kohlenstoff, Silizium oder Germanium ist,
X₃ und X₄ gleich oder voneinander verschieden sind und jeweils unabhängig Halogen sind;
R₃₁ und R₃₅ jeweils Phenyl, substituiert mit verzweigtem C₃₋₆-Alkyl, sind;
R₃₂ bis R₃₄ und R₃₆ bis R₃₈ gleich oder voneinander verschieden sind und jeweils unabhängig Wasserstoff, Halogen, C₁₋₂₀-Alkyl, C₂₋₂₀-Alkenyl, C₁₋₂₀-Alkylsilyl, C₁₋₂₀-Silylalkyl, C₁₋₂₀-Alkoxysilyl, C₁₋₂₀-Ether, C₁₋₂₀-Silylether, C₁₋₂₀-Alkoxy, C₆₋₄₀-Aryl, C₇₋₂₀-Alkylaryl oder C₇₋₂₀-Arylalkyl sind, und
Q₃ und Q₄ zueinander gleich sind und jeweils C₂₋₂₀-Alkyl sind.

2. Geträgerter Hybrid-Metallocenkatalysator gemäß Anspruch 1, worin
Q₁ und Q₂ jeweils C₁₋₃-Alkyl oder C₂₋₁₂-Alkoxyalkyl sind,
X₁ und X₂ jeweils Halogen sind, und
A₁ Silicium ist.

3. Geträgerter Hybrid-Metallocenkatalysator gemäß Anspruch 1, worin R₁ bis R₉ jeweils Wasserstoff, Halogen, lineares oder verzweigtes C₁₋₁₂-Alkyl, lineares oder verzweigtes C₁₋₁₂-Alkoxy oder C₆₋₂₀-Aryl sind.

4. Geträgerter Hybrid-Metallocenkatalysator gemäß Anspruch 1, worin R₁₀ bis R₁₇ jeweils Wasserstoff oder lineares oder verzweigtes C₁₋₁₂-Alkyl sind; oder worin zwei oder mehr benachbarte Gruppen von R₁₀ bis R₁₇ miteinander verbunden sind, um einen aliphatischen oder aromatischen C₆₋₂₀-Ring zu bilden, der mit zumindest einem C₁₋₃-Alkyl substituiert ist.

5. Geträgerter Hybrid-Metallocenkatalysator gemäß Anspruch 1, worin die erste Metallocenverbindung irgendeine der Verbindungen ist, die durch die folgenden Strukturformeln dargestellt werden:

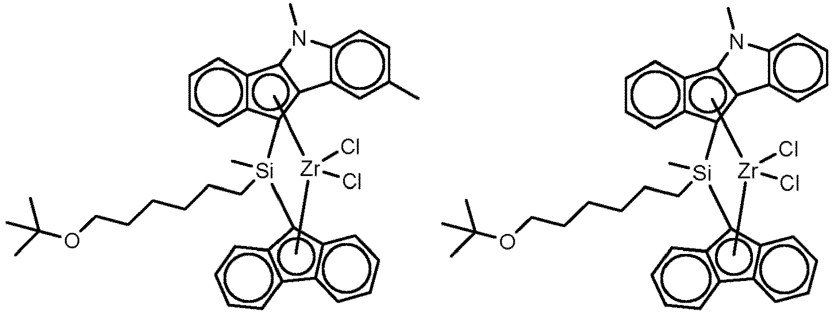

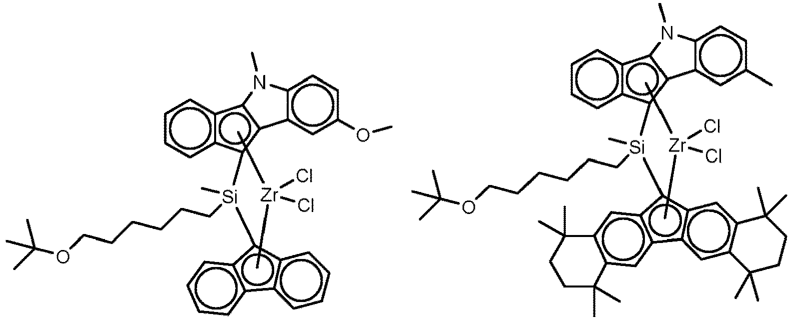

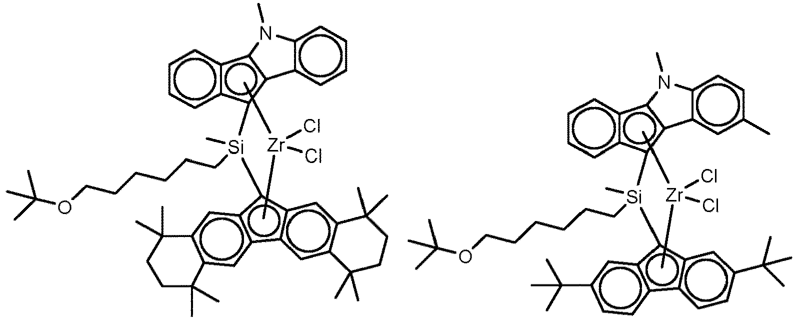

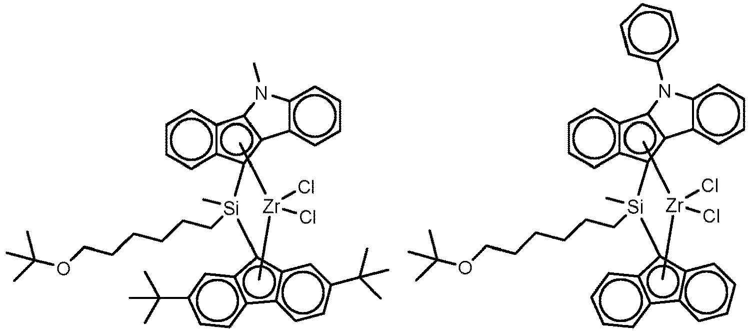

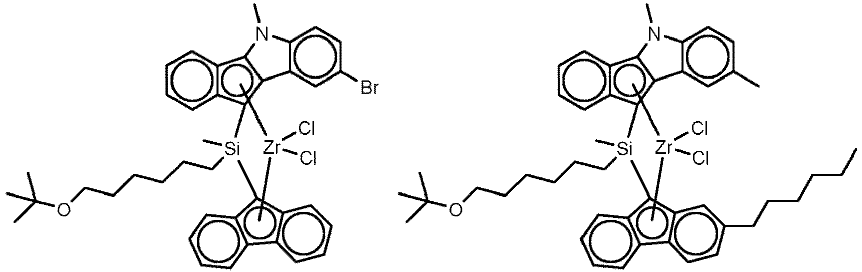

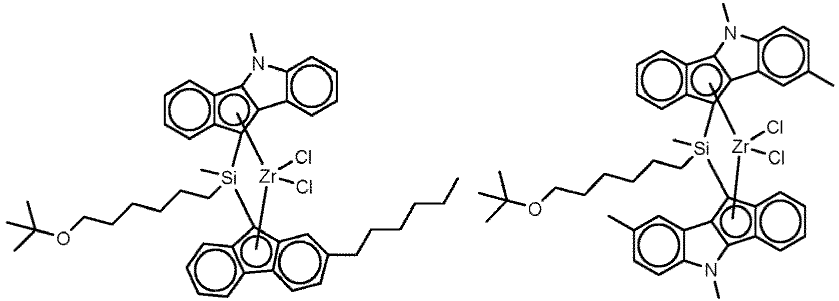

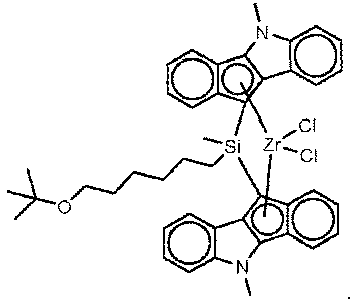

6. Geträgerter Hybrid-Metallocenkatalysator gemäß Anspruch 1, worin X₃ und X₄ jeweils Halogen sind und A₂ Silicium ist.

7. Geträgerter Hybrid-Metallocenkatalysator gemäß Anspruch 1, worin Q₃ und Q₄ gleiche zueinander sind und jeweils lineares C₂₋₄-Alkyl sind.

8. Geträgerter Hybrid-Metallocenkatalysator gemäß Anspruch 1, worin die zweite Metallocenverbindung eine Verbindug ist, die durch die folgende Strukturformel dargestellt wird:

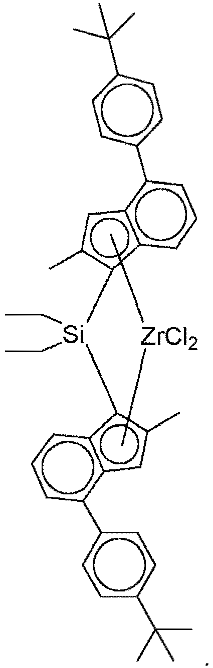

9. Geträgerter Hybrid-Metallocenkatalysator gemäß Anspruch 1, worin die erste Metallocenverbindung und die zweite metallocenverbindung in einem molaren Verhältnis von 1:1 bis 1:8 geträgert sind.

10. Verfahren zur Herstellung von Polypropylen, umfassend einen Schritt zum Polymerisieren eines Propylen-Monomers in der Gegenwart des geträgerten Hybrid-Metallocenkatalysators gemäß Anspruch 1.

11. Verfahren gemäß Anspruch 10, worin das Polypropylen ein Homopolymer ist.

12. Verfahren gemäß Anspruch 10, worin das Polypropylen eine Pentad-Sequenzverteilung, gemessen mittels ¹³C-NMR-Analyse, von 65 mmmm% oder mehr aufweist, worin die Pentad-Sequenzverteilung bestimmt wird durch Auflösen des Polypropylens in 1,1,2,2-Tetrachlorethan (TCE-d2)-Lösungsmittel und Durchführen der Messung mit einem Bruker 500 MHz-NMR bei einer Temperatur von 393K mit einer Pulssequenz=zgig30, ns=4096, d1=10 Sekunden, 1H; Pulssequenz=zg30, ns=128, d1=3 Sekunden, Analysieren der Sequenzverteilung unter Bezugnahme auf das Analyseverfahren AMT-3989-0k, und Berechnen der Pentad-Sequenzverteilung auf Grundlage der Veröffentlichung von V. Busico und R. Cipullo, Progress in Polymer Science, 2001, 26, 443-533.

13. Verfahren gemäß Anspruch 10, worin das Polypropylen eine Schmelzfestigkeit (MS) von 15 cN oder größer aufweist, worin die Schmelzfestigkeit gemessen wird mit einem Kapillarrheometer, hergestellt von Gottfert, Vorrichtungsname: Rheo-tester 2000, durch Verbinden einer Polypropylenprobe mit Rheotens für ein Kapillarrheometer, Platzieren eines Polypropylen-Pelletharzes in einer Kapillardüse bei einer Temperatur von 200°C und Schmelzen für 5 Minuten, dann Messen des Harzes, das mit einer Extrusionsgeschwindigkeit von 22 g/min durch das Rheotens konstant ausgestoßen wird, worin die maximale Zugabelastung, bis das resultierende Harzfilament reißt, als Schmelzfestigkeit ausgedrückt wird; hierbei beträgt der Kapillardüsen-Standard 4 mm Durchmesser, 25 mm Länge und Lo/Do = 6,25, der Abstand von der Kapillardüse zum Rheotens-Rad beträgt 80 mm und die eingesetzte Radbeschleunigung beträgt 1,2 cm/sek².

## Revendications

1. Catalyseur à métallocène supporté hybride comprenant au moins un premier composé métallocène sélectionné parmi les composés représentés par la formule chimique 1 suivante; au moins un second composé métallocène sélectionné parmi les composés représentés par la formule chimique 3 suivante ; et un support pour supporter les premier et second composés métallocènes : 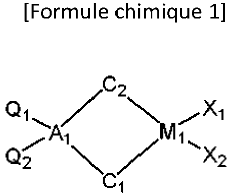 dans la formule chimique 1,
M₁ est un zirconium ou un hafnium ;
A₁ est un carbone, un silicium ou un germanium ;
Q₁ et Q₂ sont identiques ou différents l'un de l'autre, et sont chacun indépendamment un hydrogène, un halogène, un alkyle en C₁₋₂₀, un alcényle en C₂₋₂₀, un alcoxyalkyle en C₂₋₂₀, un aryloxyalkyle en C₇₋₄₀, un aryle en C₆₋₄₀, un alkylaryle en C₇₋₄₀ ou un arylalkyle en C₇₋₄₀ ;
X₁ et X₂ sont identiques ou différents l'un de l'autre, et sont chacun indépendamment un halogène, un alkyle en C₁₋₂₀, un alcényle en C₂₋₂₀, un aryle en C₆₋₄₀, un groupe nitro, un groupe amido, un alkylsilyle en C₁₋₂₀, un alcoxy en C₁₋₂₀ ou un groupe sulfonate en C₁₋₂₀ ;
C₁ et C₂ sont identiques ou différents l'un de l'autre, et sont chacun représentés indépendamment soit par la formule chimique 2a suivante, soit par la formule chimique 2b suivante, à condition que le cas dans lequel C₁ et C₂ sont tous les deux la formule chimique 2b soit exclu ; 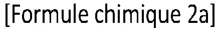 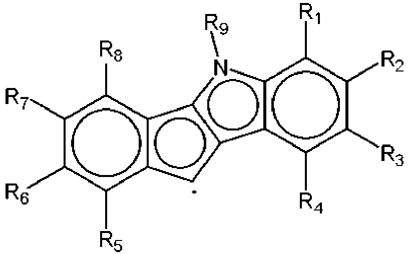 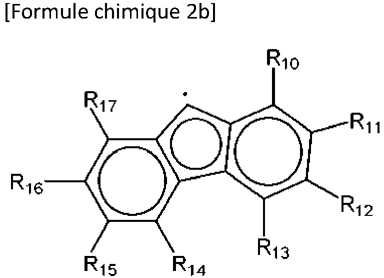
dans les formules chimiques 2a et 2b,
R₁ à R₁₇ sont identiques ou différents les uns des autres, et sont chacun indépendamment un hydrogène, un halogène, un alkyle en C₁₋₂₀, un haloalkyle en C₁₋₂₀, un alcényle en C₂₋₂₀, un alkylsilyle en C₁₋₂₀, un silylalkyle en C₁₋₂₀, un alcoxysilyle en C₁₋₂₀, un alcoxy en C₁₋₂₀, un aryle en C₆₋₄₀, un alkylaryle en C₇₋₄₀, ou un arylalkyle en C₇₋₄₀ ; ou deux ou plus de deux groupes voisins des R₁₀ à R₁₇ sont reliés les uns aux autres pour former un cycle aliphatique ou aromatique substitué ou non substitué ;
- représente le site de liaison à A₁ et à M₁ ; 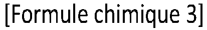 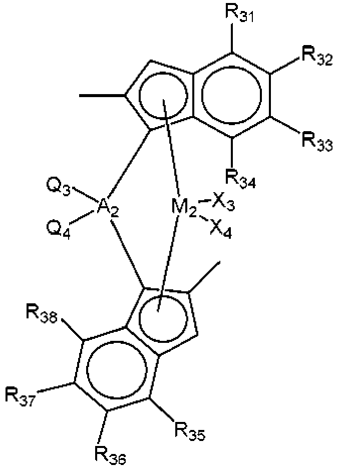
dans la formule chimique 3,
M₂ est un zirconium ou un hafnium ;
A₂ est un carbone, un silicium ou un germanium ;
X₃ et X₄ sont identiques ou différents l'un de l'autre et sont chacun indépendamment un halogène,
R₃₁ et R₃₅ sont chacun un phényle substitué avec un alkyle ramifié en C₃₋₆ ;
R₃₂ à R₃₄ et R₃₆ à R₃₈ sont identiques ou différents les uns des autres, et sont chacun indépendamment un hydrogène, un halogène, un alkyle en C₁₋₂₀, un alcényle en C₂₋₂₀, un alkylsilyle en C₁₋₂₀, un silylalkyle en C₁₋₂₀, un alcoxysilyle en C₁₋₂₀, un éther en C₁₋₂₀, un silyléther en C₁₋₂₀, un alcoxy en C₁₋₂₀, un aryle en C₆₋₄₀, un alkylaryle en C₇₋₂₀ ou un arylalkyle en C₇₋₂₀, et
Q₃ et Q₄ sont identiques l'un à l'autre et sont chacun un alkyle en C₂₋₂₀.

2. Catalyseur à métallocène supporté hybride selon la revendication 1, dans lequel
les Q₁ et Q₂ sont chacun un alkyle en C₁₋₃ ou un alcoxyalkyle en C₂₋₁₂,
les X₁ et X₂ sont chacun un halogène, et
le A₁ est un silicium.

3. Catalyseur à métallocène supporté hybride selon la revendication 1, dans lequel les R₁ à R₉ sont chacun un hydrogène, un halogène, un alkyle en C₁₋₁₂ linéaire ou ramifié, un alcoxy en C₁₋₁₂ linéaire ou ramifié ou un aryle en C₆₋₂₀.

4. Catalyseur à métallocène supporté hybride selon la revendication 1, dans lequel les R₁₀ à R₁₇ sont chacun un hydrogène, ou un alkyle en C₁₋₁₂ linéaire ou ramifié ; ou deux ou plus de deux groupes voisins des R10 à R17 sont reliés les uns aux autres pour former un cycle aliphatique ou aromatique en C₆₋₂₀, qui est substitué avec au moins un alkyle en C₁₋₃.

5. Catalyseur à métallocène supporté hybride selon la revendication 1, dans lequel le premier composé métallocène est l'un quelconque des composés représentés par les formules de structure suivantes.

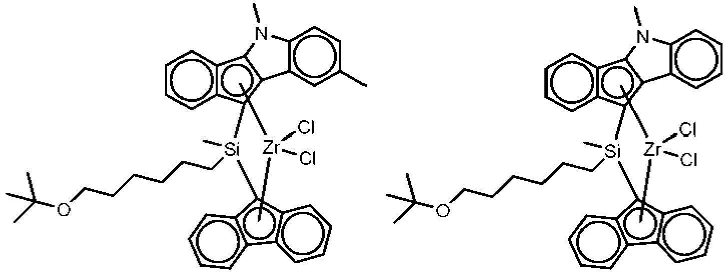

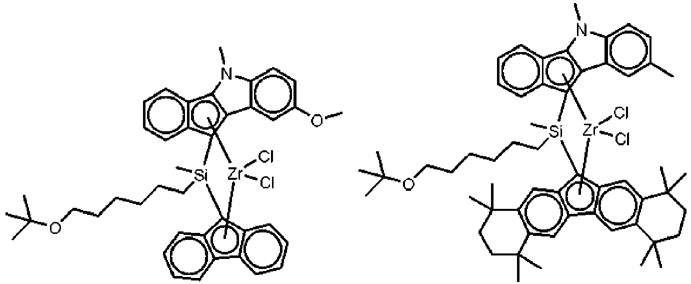

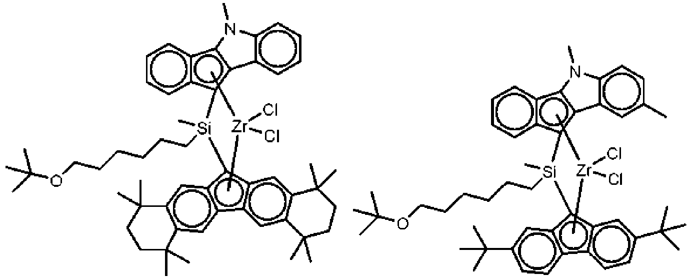

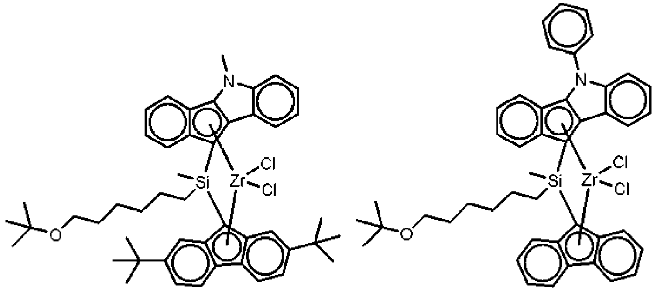

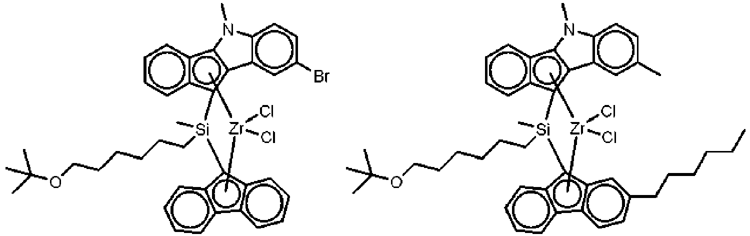

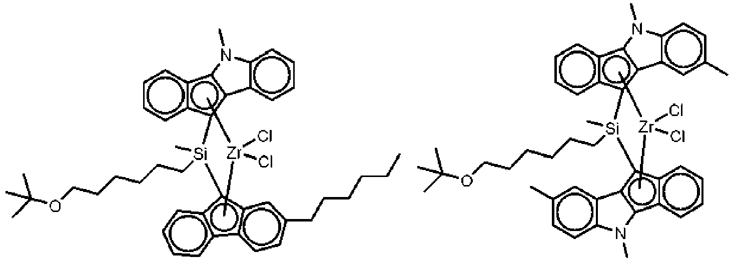

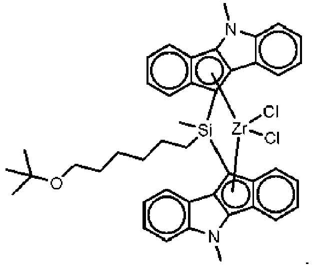

6. Catalyseur à métallocène supporté hybride selon la revendication 1, dans lequel les X₃ et X₄ sont chacun un halogène, et le A₂ est un silicium.

7. Catalyseur à métallocène supporté hybride selon la revendication 1, dans lequel les Q₃ et Q₄ sont identiques l'un à l'autre, et sont chacun un alkyle linéaire en C₂₋₄.

8. Catalyseur à métallocène supporté hybride selon la revendication 1, dans lequel le second composé métallocène est un composé représenté par la formule de structure suivante.

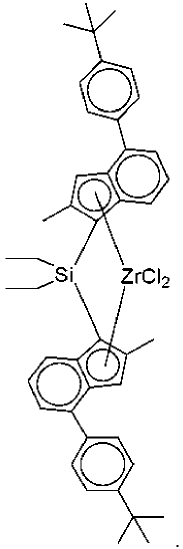

9. Catalyseur à métallocène supporté hybride selon la revendication 1, dans lequel le premier composé métallocène et le second composé métallocène sont supportés à un rapport molaire de 1:1 à 1:8.

10. Procédé de préparation d'un polypropylène, comprenant une étape de polymérisation d'un monomère de propylène en présence du catalyseur à métallocène supporté hybride selon la revendication 1.

11. Procédé selon la revendication 10, dans lequel le polypropylène est un homopolymère.

12. Procédé selon la revendication 10, dans lequel le polypropylène présente une répartition de séquence pentade mesurée par analyse RMN ¹³C de 65 % mmmm ou plus, dans lequel la répartition de séquence pentade est déterminée en dissolvant le polypropylène dans un solvant 1,1,2,2-tétrachloroéthane (TCE-d2) et en effectuant la mesure au moyen d'un Bruker 500 MHz RMN à une température de 393K à une séquence d'impulsions = zgig30, ns = 4096, d1 = 10 sec, 1H ; séquence d'impulsions = zg30, ns = 128, d1 = 3 sec, en analysant la répartition de séquence en se référant au procédé d'analyse AMT-3989-0k, et en calculant la répartition de séquence pentade sur la base de l'article, V. Busico et R. Cipullo, Progress in Polymer Science, 2001, 26, 443-533.

13. Procédé selon la revendication 10, dans lequel le polypropylène présente une résistance à l'état fondu (MS) de 15 cN ou plus, dans lequel la résistance à l'état fondu est mesurée au moyen d'un rhéomètre capillaire ; fabriqué par Gottfert, nom du dispositif : Rheo-tester 2000 en reliant un échantillon de polypropylène au Rheotens pour un rhéomètre capillaire, en plaçant une résine en granulés de polypropylène dans un tube capillaire à une température de 200 °C, et en faisant fondre pendant 5 minutes, puis en mesurant la résine qui sort constamment à une vitesse d'extrusion de 22 g/min à travers le Rheotens, selon lequel la contrainte de traction maximale jusqu'à la rupture du filament de résine résultant est exprimée en résistance à l'état fondu ; à ce stade, le tube capillaire standard est de 4 mm de diamètre, 25 mm de longueur et Lo/Do = 6,25, la distance entre le tube capillaire et la roue Rheotens est de 80 mm, et l'accélération de la roue est appliquée à 1,2 cm/sec².
